(19) Europäisches Patentamt European Patent Office Office européen des brevets

(11) **EP 4 352 854 B1**

(12) **EUROPÄISCHE PATENTSCHRIFT**

(45) Veröffentlichungstag und Bekanntmachung des Hinweises auf die Patenterteilung:
**30.04.2025 Patentblatt 2025/18**

(21) Anmeldenummer: **22734873.7**

(22) Anmeldetag: **07.06.2022**

(51) Internationale Patentklassifikation (IPC):
*H02J 50/12* (2016.01)     *H02J 50/80* (2016.01)
*H02K 41/02* (2006.01)     *B60L 13/03* (2006.01)

(52) Gemeinsame Patentklassifikation (CPC):
**H02J 50/12; B60L 53/122; B60L 53/66;
H01F 38/14; H02J 50/80; H02K 41/031;
H02K 11/0094**

(86) Internationale Anmeldenummer:
**PCT/EP2022/065316**

(87) Internationale Veröffentlichungsnummer:
**WO 2022/258566 (15.12.2022 Gazette 2022/50)**

(54) **VERFAHREN ZUR INDUKTIVEN ENERGIEÜBERTRAGUNG**

METHOD FOR INDUCTIVE ENERGY TRANSMISSION

PROCÉDÉ DE TRANSFERT D'ÉNERGIE PAR INDUCTION

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **08.06.2021 AT 504602021**

(43) Veröffentlichungstag der Anmeldung:
**17.04.2024 Patentblatt 2024/16**

(73) Patentinhaber: **ABB Schweiz AG**
**5400 Baden (CH)**

(72) Erfinder: **KREINDL, Andreas**
**5142 Eggelsberg (AT)**

(74) Vertreter: **Patentanwälte Pinter & Weiss OG**
**Prinz-Eugen-Straße 70**
**1040 Wien (AT)**

(56) Entgegenhaltungen:
**EP-B1- 0 187 527**     **US-A1- 2007 289 476**
**US-A1- 2012 217 111**

• **ZHANG ZHEN ET AL: "Continuously Adjustable
Capacitor for Multiple-Pickup Wireless Power
Transfer Under Single-Power-Induced Energy
Field", IEEE TRANSACTIONS ON INDUSTRIAL
ELECTRONICS, IEEE SERVICE CENTER,
PISCATAWAY, NJ, USA, vol. 67, no. 8, 28 August
2019 (2019-08-28), pages 6418 - 6427,
XP011782013, ISSN: 0278-0046, [retrieved on
20200408], DOI: 10.1109/TIE.2019.2937056**

**Beschreibung**

Die gegenständliche Erfindung betrifft ein Verfahren zur induktiven Energieübertragung zwischen einem Primärteil und einem Sekundärteil, wobei der Primärteil und der Sekundärteil Teile eines Transportsystems, vorzugsweise eines Linearmotorsystems, eines Planarmotorsystems oder einer Magnetschwebebahn, sind, wobei der Primärteil einem feststehenden Teil des Transportsystems und der Sekundärteil einem relativ zu diesem beweglichen Teil des Transportsystems entspricht, wobei der Sekundärteil relativ zum Primärteil bewegt wird, wobei von einer Versorgungseinheit in eine am Primärteil angeordnete Sendespule ein elektrischer Primärstrom zum Aufbau eines ersten magnetischen Wechselfeldes zur Energieübertragung eingebracht wird, wodurch in einer am Sekundärteil angeordneten Empfangsspule eine elektrische Wechselspannung induziert wird, die einen elektrischen Sekundärstrom am Sekundärteil und damit einen eine unkompensierte Wirkleistung umfassenden Leistungsfluss zu zumindest einem mit der Empfangsspule verbundenen Verbraucher herbeiführt.

Verfahren zur kontaktlosen Energieübertragung spielen in einer großen Zahl von technischen Anwendungen eine wichtige Rolle. Ladesysteme für Elektroautos und Transportsysteme in Form von Linear- oder Planarmotorsystemen, in denen bewegte Komponenten mit elektrischer Energie versorgt werden müssen, sind dafür nur auszugsweise Beispiele. Als deren Vorteile im Vergleich zu konduktiven Energieübertragungssystemen sind insbesondere eine oft kompaktere Ausführung, welche vielfach durch einen Wegfall von Kabeln und Steckern ermöglicht wird, eine damit einhergehende höhere Robustheit und eine häufig höhere Lebensdauer durch eine Reduktion von Verschleißteilen zu nennen. Obwohl kontaktlose Energieübertragungssysteme seit langem bekannt sind, führen vor allem die steten Forderungen nach höherer Effizienz und geringeren Verlusten fortlaufend zu neuen technologischen Problemstellungen.

Eine in diesem Zusammenhang wesentliche Aufgabenstellung, der im Besonderen bei Transportsystemen große Bedeutung zukommt, ist die Realisierung einer effizienten und verlustarmen kontaktlosen Energieübertragung unter Berücksichtigung von Einspeise- und Übertragungslimitierungen. Einspeise- und Übertragungslimitierungen ergeben sich hierbei vielfach durch physikalische Grenzen von leistungselektronischen Vorrichtungen, insbesondere wenn diese in Versorgungseinheiten zur elektrischen Versorgung von Energieübertragungssystemen angeordnet sind. Als Beispiele physikalischer Grenzen sind diesbezüglich vor allem begrenzte Zwischenkreis- und damit begrenzte Versorgungsspannungen, begrenzte elektrische Ströme aufgrund einer vielfach begrenzten thermischen Belastbarkeit und elektromagnetische Effekte, wie der Skin- oder der Proximity-Effekt, zu nennen. Eine direkte Konsequenz einer begrenzten Versorgungsspannung in Kombination mit einem nur begrenzt zulässigen Strom ist eine Begrenzung der verfügbaren elektrischen (Versorgungs-)Leistung, was die Abgabe elektrischer Energie von einer Versorgungseinheit an ein Energieversorgungssystem empfindlich beeinträchtigen kann.

Zur Lösung der genannten Aufgabenstellung wird im Stand der Technik vielfach auf das Konzept der "resonanten Kopplung" zurückgegriffen. Dabei werden im Fall einer induktiven Energieübertragung an die üblicherweise vorgesehenen Sende- und Empfangsspulen kapazitive Energiespeicher in Form von Kondensatoren angeschlossen. Aus der Verschaltung von Sende- und Empfangsspulen mit Kondensatoren entstehen so zum einen Schwingkreise, zum anderen ergibt sich aus dem Verbund der Schwingkreise insgesamt eine resonanzfähige elektrische Schaltung. Das übliche Ziel einer resonanten Kopplung ist an dieser Stelle, die oft als Anregungsfrequenz bezeichnete Frequenz der an die Sendespule angelegten Versorgungsspannung möglichst gleich einer Resonanzfrequenz der resonanzfähigen elektrischen Schaltung zu wählen. Dadurch wird vor allem die magnetische Kopplung zwischen Sende- und Empfangsspulen erhöht, womit vielfach eine effiziente und verlustarme Energieübertragung herbeigeführt werden kann.

Im Fall der erwähnten Transportsysteme, beispielsweise in Form eines Linearmotorsystems, eines Planarmotorsystems oder einer Magnetschwebebahn, ist die Implementierung einer resonanten Kopplung oftmals jedoch signifikant erschwert, insbesondere durch den Umstand, dass Relativbewegungen zwischen den an der Energieübertragung beteiligten Komponenten während des Betriebs nicht nur möglich, sondern meist sogar die Regel sind. Derartige Relativbewegungen beeinflussen dabei die Resonanzfrequenzen eines Energieübertragungssystems vielfach signifikant. Aufgrund der Tatsache, dass eine resonante Kopplung typischerweise eine präzise und hochgenaue Abstimmung zwischen Anregungsfrequenz und Resonanzfrequenz erfordert, können sich Verschiebungen von Resonanzfrequenzen in vielen Fällen äußerst negativ auf die Menge von letztlich übertragener Energie auswirken.

Feststehende Komponenten eines Transportsystems werden in diesem Zusammenhang oft als "Primärteile" bezeichnet, wohingegen für relativ zu einem Primärteil bewegliche Komponenten eines Transportsystems die Bezeichnung "Sekundärteile" üblich ist. Auf den beweglichen Sekundärteilen sind dabei insbesondere in der Linearmotortechnik zunehmend elektrische und/oder elektronische Komponenten angeordnet, für die eine entsprechende elektrische Energieversorgung vorzusehen ist. Da einerseits Batterien an und in den Sekundärteilen vielfach nicht erwünscht sind, andererseits eine konduktive Energieübertragung zur Versorgung häufig nicht umsetzbar ist, ist gerade bei Linear- und Planarmotorsystemen die Frage nach einer kontaktlosen Energieübertragung, die vor allem verlustarm und effizient erfolgen soll, trotz erschwerter Bedingungen durch mögliche Relativbewegungen zwischen Primär- und Sekundärteil von großer Bedeutung. Diesen Umstand spiegelt auch der bekannte Stand der Technik wider.

So beschreibt die US 7958830 B2 für einen Linearmotor eine induktive Energieübertragung von einem feststehenden Primärteil zu einem relativ zu diesem beweglichen Sekundärteil. Es wird erwähnt, dass der Schaltkreis zum Energieempfang auf dem Sekundärteil so eingestellt ist, dass eine maximale Energie gekoppelt wird, wobei nicht erklärt wird, was diese Einstellung konkret bedeutet, beispielsweise in Bezug auf eine eventuelle Abstimmung einer Anregungsfrequenz mit einer Resonanzfrequenz.

Die EP 2793356 B1 und die EP 2903407 A1 offenbaren demgegenüber ebenfalls für Linearmotoren eine kapazitive Energieübertragung von einem statischen Primärteil zu einem relativ zu diesem beweglichen Sekundärteil, wofür sowohl der Primär- als auch der Sekundärteil mit Elektrodenplatten ausgestattet werden. Die Elektrodenplatten dienen bei beiden Druckschriften dem Aufbau eines elektrischen Feldes zwischen Primär- und Sekundärteil, durch welches die gewünschte Energieübertragung erfolgt. Ähnlich der US 7958830 B2 beschreibt die EP 2793356 B1 eine Abstimmung der an der Energieübertragung beteiligten elektrischen Komponenten zur Herbeiführung einer minimalen Impedanz der elektrischen Schaltung, welche durch die beteiligten elektrischen Bauteile gebildet wird, wobei aber auch hier keine Details zur Durchführung dieser Einstellung angegeben werden. Die Schrift US 2012/217111 A1 zeigt ferner ein System zur Stromversorgung von Elektrofahrzeugen auf der Straße, bei dem mehrere in oder unter einer Fahrbahn angeordnete Module vorgesehen sind, um Elektrofahrzeugen induktiv Strom zur Verfügung stellen. Die Komponenten der US 2012/217111 A1 müssen jedoch stillstehen.

Die in den zitierten Druckschriften offenbarten Konzepte weisen in der praktischen Umsetzung mehrere Nachteile auf. Im Fall einer kapazitiven Energieübertragung ist in diesem Zusammenhang vor allem der notwendige Einbau zusätzlicher Elektrodenplatten kritisch zu beurteilen. Der damit einhergehende, zusätzliche Hardwareaufwand kann dabei in vielen Fällen nicht auf vertretbare Weise umgesetzt werden. Daneben sind oftmals vor allem elektromagnetische Störungen unerwünschte Begleiterscheinungen von kapazitiven Energieübertragungssystemen, die deren Einsatz vielfach erschweren und teils sogar verhindern. Die gegenständliche Erfindung ist nicht zuletzt aus diesen Gründen auf induktive Energieübertragungssysteme ausgerichtet.

Ein weiterer Nachteil bekannter Methoden sowohl zur kapazitiven wie auch zur induktiven Energieübertragung ergibt sich bei Transportsystemen wie erwähnt aus dem Umstand, dass zwischen einem versorgenden Primärteil und einem versorgten Sekundärteil üblicherweise Relativbewegungen auftreten. Dadurch können sich die Übertragungs- und Kopplungsverhältnisse zwischen den Bestandteilen eines Energieübertragungssystems ändern, was unter anderem eine Verschiebung der elektrischen Resonanzfrequenzen des Energieübertragungssystems zur Folge haben kann. Ist der kontaktlosen Energieübertragung in diesem Zusammenhang eine resonante Kopplung zugrunde gelegt, muss aus offensichtlichen Gründen die Anregungsfrequenz an sich gegebenenfalls ändernde Resonanzfrequenzen angepasst werden. Eine derartige Adaption ist im Stand der Technik nicht offenbart. Neben Relativbewegungen zwischen Primär- und Sekundärteil können auch Erwärmung, Alterung, Verschleiß und nichtlineare Eigenschaften von elektrischen Bauteilen Veränderungen der Übertragungsverhältnisse verursachen, was die Notwendigkeit eines geeigneten Adaptionsmechanismus zusätzlich erhöht.

Ein weiteres in diesem Zusammenhang bedeutendes Problem, das im Stand der Technik keine Berücksichtigung findet, betrifft die Art der übertragenen Energie bzw. Leistung. Aus offensichtlichen Gründen liefert nur übertragene Wirkleistung einen bleibenden Beitrag zur Versorgung eines auf einem Sekundärteil eines Transportsystems angeordneten Verbrauchers. Im Zuge einer induktiven Energieübertragung stets mitübertragene Blindleistung pendelt demgegenüber bekanntlich ausschließlich zwischen im Energieübertragungssystem gegebenen Energiespeichern hin- und zurück und trägt demnach nicht zu einer verwertbaren Versorgung eines Verbrauchers bei. Der Fokus einer effizienten induktiven Energieübertragung ist demnach primär auf die übertragene Wirkleistung zu legen, was im Stand der Technik vielfach nicht in einem ausreichenden Maß geschieht.

Bei Linear- und Planarmotoren werden die genannten Probleme in der Praxis oftmals durch die Forderung verstärkt, den mit einem Einbau gesonderter Sendespulen zur induktiven Energieübertragung einhergehenden Mehraufwand an Bauteilen und Kosten möglichst zu vermeiden. Häufig werden deshalb bereits vorhandene Antriebsspulen zur Bildung einer Vortriebskraft zwischen einem Primär- und einem Sekundärteil zusätzlich auch als Sendespulen zur induktiven Energieübertragung eingesetzt. Typischerweise besitzen diese Spulen jedoch eine große Streuinduktivität, die insbesondere durch einen im Vergleich zu anderen Anwendungen induktiver Energieübertragung großen Luftspalt hervorgerufen wird. Als Streuinduktivitäten werden in diesem Zusammenhang jene Anteile von Sende- und Empfangsspule bezeichnet, die einen magnetischen Fluss erzeugen, welcher die jeweils andere Spule nicht durchsetzt und demnach nur Selbstinduktionswirkung besitzt. Wie hinlänglich bekannt ist, stellt demgegenüber eine sogenannte Hauptinduktivität jenen Anteil beider Spulen dar, der einen beide Spulen durchsetzenden magnetischen Fluss erzeugt, damit Selbst-als auch Gegeninduktionswirkung besitzt und so die für eine induktive Energieübertragung notwendige Kopplung von Primär- und Sekundärteil herbeiführt. Hinsichtlich der gegenständlichen Energieübertragung sind große Streuinduktivitäten aus mehreren Gründen nachteilig. Insbesondere erhöhen sie die auftretende Blindleistung, was gerade bei einer nur begrenzt zur Verfügung stehenden Versorgungsspannung bzw. Versorgungsleistung direkt die übertragbare Wirkleistung verringert.

Soll anhand einer Sendespule gleichzeitig Energie übertragen als auch Vortriebskraft generiert werden, geschieht dies üblicherweise durch die Überlagerung von niederfrequenten Strömen, welche zur Bildung einer Vortriebskraft in die Antriebsspulen eingebracht werden und deshalb auch als Antriebsströme bezeichnet werden, mit im Vergleich zu diesen höherfrequenten Strömen, welche die gewünschte Energieübertragung herbeiführen. Ist in einem derartigen Fall die zur Verfügung stehende Versorgungsspannung begrenzt und wird von dieser begrenzten Versorgungsspannung bereits ein großer Teil zur Ausbildung von Strömen zur Krafterzeugung verwendet, ist ersichtlich, dass die verbleibende Spannungsreserve optimal zur Übertragung von Wirkleistung genutzt werden muss.

Es ist deshalb eine Aufgabe der gegenständlichen Erfindung, die kontaktlose und dabei vor allem induktive Energieübertragung zwischen einem Primär- und einem relativ dazu beweglichen Sekundärteil eines Transportsystems zu verbessern. Dabei soll nur ein geringer zusätzlicher Hardwareaufwand entstehen, eine robuste und sichere Adaption auf sich im Betrieb ändernde Übertragungsverhältnisse ermöglicht werden und insbesondere die übertragene Wirkleistung optimiert werden.

Diese Aufgabe wird erfindungsgemäß durch die Merkmale der unabhängigen Ansprüche gelöst. Dabei wird von einem System zur induktiven Energieübertragung zwischen einem Primär- und einem Sekundärteil ausgegangen, wobei der Primärteil und der Sekundärteil Teile eines Transportsystems, vorzugsweise eines Linearmotorsystems, eines Planarmotorsystems oder einer Magnetschwebebahn, sind, wobei der Primärteil einem feststehenden Teil des Transportsystems und der Sekundärteil einem relativ zu diesem beweglichen Teil des Transportsystems entspricht, wobei der Sekundärteil relativ zum Primärteil bewegt wird, bei dem mittels einer Versorgungseinheit in eine am Primärteil angeordnete Sendespule ein elektrischer Primärstrom eingebracht wird, welcher ein erstes magnetisches Wechselfeld zur Energieübertragung herbeiführt, welches in einer am Sekundärteil angeordneten Empfangsspule eine elektrische Wechselspannung induziert und dadurch einen Strom- und somit einen ersten Leistungsfluss zu zumindest einem mit der Empfangsspule verbundenen Verbraucher herbeiführt. Hinsichtlich des ersten Leistungsflusses gilt, dass dieser auch ohne Anwendung des nachfolgend beschriebenen erfindungsgemäßen Verfahrens auftreten würde, dabei jedoch nur eine sogenannte nominelle Wirkleistung transportieren würde. Eine solche nominelle Wirkleistung wird nachfolgend auch als "unkompensierte" Wirkleistung bezeichnet.

Im Kern sieht die gegenständliche Erfindung für ein derartiges System vor, durch eine am relativ zum Primärteil bewegten Sekundärteil angeordnete Kompensationseinheit einen sekundärseitigen Kompensationsstrom in die sekundärseitige Empfangsspule oder in eine gegebenenfalls weitere auf dem Sekundärteil angeordnete Spule einzubringen. Der Zweck der sekundärseitigen Einbringung von Kompensationsstrom ist es, ein zweites magnetisches Wechselfeld zu erzeugen, welches in der Sendespule am Primärteil eine Kompensationsspannung induziert, welche die Phasenverschiebung zwischen der gesamten an der Sendespule abfallenden Spannung und dem durch die Sendespule fließenden Strom verändert. Die Veränderung dieser Phasenverschiebung erfolgt dabei erfindungsgemäß so, dass die im Zuge der Energieübertragung vom Primär- zum Sekundärteil übertragene Wirkleistung erhöht wird. Diese Vorgehensweise trägt dem Umstand Rechnung, dass für die Versorgung eines sich auf der Sekundärseite befindenden Verbrauchers insbesondere die zu diesem übertragene Wirkleistung von Bedeutung ist.

Erfindungsgemäß ist vorgesehen, dass in die am Primärteil angeordnete Sendespule kein die Phasenverschiebung zwischen der an der Sendespule abfallenden elektrischen Primärspannung und dem durch die Sendespule fließenden Primärstrom verändernder, primärseitiger Kompensationsstrom eingebracht wird, welcher von einem in Serie zur Sendespule und zwischen die Versorgungseinheit und die Sendespule geschalteten elektrischen Speicherelement bereitgestellt wird. Als elektrische Speicherelemente zur Bereitstellung eines Kompensationsstromes werden bevorzugt Kondensatoren eingesetzt. Ein seriell zur Sendespule geschalteter Kondensator würde aber die Einbringung eines Gleichstromes in die Sendespule unterbinden. Aus diesem Grund erlaubt der Verzicht auf seriell zur Sendespule geschaltete Speicherelemente, in der Sendespule auch elektrische Gleichgrößen, wie einen elektrischen Gleichstrom, einzustellen.

In einer besonders vorteilhaften Weise wird die Phasenverschiebung zwischen der an der Sendespule abfallenden elektrischen Primärspannung und dem durch die Sendespule fließenden Primärstrom nur, also ausschließlich, durch die vom sekundärseitigen Kompensationsstrom hervorgerufene und in der Sendespule induzierte primärseitige Kompensationsspannung verändert. In diesem Fall wird auf der Primärseite auf elektrische Speicherelemente zur Bereitstellung eines Kompensationsstromes zur Gänze verzichtet, was sowohl einen Verzicht auf seriell, als auch parallel zur Sendespule geschaltete Speicherelemente miteinschließt.

Die Möglichkeit, eine Sendespule durch die Versorgungseinheit auch mit Gleichstrom zu versorgen, ist insbesondere bei der Verwendung des gegenständlichen Energieübertragungssystems bei Transportsystemen, wie bei einem Linearmotorsystem, einem Planarmotorsystem oder einer Magnetschwebebahn, entscheidend. Hierbei werden Sendespulen vielfach auch zu Erzeugung einer Antriebskraft verwendet, wozu in vielen Fällen auch Gleichströme in die Sendespulen einzubringen sind.

Vorteilhafterweise wird vollständig auf weitere am Primärteil vorgesehene Speicherelemente zur Bereitstellung eines primärseitigen Kompensationsstromes verzichtet. In diesem Fall sind weder seriell, noch parallel zur Sendespule geschaltete Speicherelemente vorgesehen, wie z.B. Kondensatoren oder andere Speicherelemente. Zwar würden parallel zur Sendespule geschaltete Speicherelemente einen Einsatz des gegenständlichen Energieübertragungssystems bei einem der oben genannten Transportsysteme nicht prinzipbedingt ausschließen. In vielen Fällen ist der Einsatz von parallel zu Sendespulen geschalteten Speicherelementen jedoch mit großem Aufwand verbunden, insbesondere da bei Linearmotorsystemen eine große Zahl an Sendespule gegeben sind, sodass in einem solchen Fall insgesamt eine große Zahl an Speicherelementen vorgesehen werden müsste.

Im Zuge einer induktiven Energieübertragung ebenfalls übertragene Blindleistung pendelt bekanntlich zwischen elektrischen Speicherelementen hin- und zurück und liefert demnach keinen bleibenden Beitrag zur Versorgung von sekundärseitigen Verbrauchern. Die gegenständliche Erfindung trägt diesem Umstand Rechnung und legt deshalb wie beschrieben den Fokus auf die übertragene Wirkleistung. Hierbei hat sich gezeigt, dass zur Erhöhung von übertragener Wirkleistung insbesondere die Phasenlage zwischen an der Sendespule abfallender Spannung und durch die Sendespule fließendem Strom von Bedeutung ist. Ein Maximum an übertragener Wirkleistung wird erreicht, wenn die genannte Phasenlage entweder null oder plus/minus 180 Grad annimmt. Durch das Einbringen eines sekundärseitigen Kompensationsstromes wird ebendiese Phasenlage so modifiziert, dass die übertragene Wirkleistung im Vergleich zu einem Betrieb ohne Kompensationsstromeinbringung erhöht wird. Dabei kann sogar der (paradoxe) Fall eintreten, dass die in Summe übertragene Scheinleistung im Vergleich zum Betrieb eines induktiven Energieübertragungssystems ohne erfindungsgemäße Kompensationsstromeinbringung geringer wird. Eine resonante Kopplung wird dabei nicht explizit angestrebt und stellt insbesondere keine notwendige Voraussetzung für den Einsatz des erfindungsgemäßen Verfahrens dar.

In anderen Worten ausgedrückt unterstützt die Sekundärseite die Primärseite mit einer zusätzlich in der Hauptinduktivität des Energieübertragungssystems induzierten Spannung beim Umladen der Hauptinduktivität. Dadurch wird in der Versorgungseinheit eine Spannungsreserve frei, die für die Erhöhung der übertragenen Wirkleistung verwendet wird. Da diese frei gewordene und zur Erhöhung der übertragenen Wirkleistung verwendete Spannungsreserve in weiterer Folge in Phase mit dem bereits fließenden Strom anliegt, ändert sich die Phasendifferenz zwischen der gesamten an der Sendespule abfallenden Spannung und dem durch die Sendespule fließenden Strom in der oben beschriebenen Weise.

In diesem Zusammenhang ist anzumerken, dass die mit dem sekundärseitigen Kompensationsstrom eingebrachte Leistung selbst eine meist kapazitive Blindleistung darstellt. Für die gegenständige Erfindung ist hierbei entscheidend, dass diese meist kapazitive Blindleistung bewusst von der Sekundärseite auf die Primärseite übertragen wird. Dadurch wird in vielen Fällen neben der erfindungsgemäßen Änderung der genannten Phasenbeziehung erreicht, dass in der Hauptinduktivität und vielfach auch in den primärseitigen Streuinduktivitäten auftretende Blindleistung nicht mehr ausschließlich von der Versorgungseinheit bereitgestellt werden muss. Der vorteilhafte Nebeneffekt einer zumindest teilweisen sekundärseitigen Kompensation einer primärseitigen Blindleistung kann hierbei vielfach zu einer weiteren Verbesserung der Energieübertragung beitragen.

In einer vorteilhaften Weise werden dabei zumindest 50% der Blindleistung der Hauptinduktivität sekundärseitig, also vom Sekundärteil, bereitgestellt. Bevorzugterweise können aber auch zumindest 75% der Blindleistung der Hauptinduktivität vom Sekundärteil bereitgestellt werden, oder zumindest 90% der Blindleistung der Hauptinduktivität vom Sekundärteil bereitgestellt werden. Höchstbevorzugt wird die gesamte Blindleistung der Hauptinduktivität vom Sekundärteil bereitgestellt.

In einer vorteilhaften Weise werden hierbei stets weniger als 20% der Blindleistung der primärseitigen Streuinduktivitäten sekundärseitig, also vom Sekundärteil, bereitgestellt. Es können aber auch weniger als 15% der Blindleistung der primärseitigen Streuinduktivitäten vom Sekundärteil bereitgestellt werden, oder es können auch weniger als 10% der Blindleistung der primärseitigen Streuinduktivitäten vom Sekundärteil bereitgestellt werden. Damit wird im Rahmen der Erfindung typischerweise ein stets wesentlich größerer Teil der Blindleistung der Hauptinduktivität kompensiert als von der Blindleistung der primärseitigen Streuinduktivitäten.

Im Rahmen der gegenständlichen Erfindung wird es damit möglich, auf eine primärseitige Blindleistungskompensation zu verzichten. Natürlich kann auch bei einer nicht vollständigen Kompensation der Blindleistung der Hauptinduktivität durch den Sekundärteil auf eine primärseitige Blindleistungskompensation verzichtet werden, z.B. wenn keine vollständige Kompensation der Blindleistung der Hauptinduktivität angestrebt wird. Vorteilhafterweise kann damit am Primärteil auf Bauteile zur Blindleistungskompensation, wie parallel oder seriell zur primärseitigen Sendespule geschaltete Kondensatoren, verzichtet werden.

Zur Umsetzung der oben beschriebenen Schritte wird wie erwähnt eine sekundärseitige Kompensationseinheit eingesetzt, die einen sekundärseitigen Kompensationsstrom an eine auf dem Sekundärteil vorgesehene Empfangsspule abgibt beziehungsweise von dieser aufnimmt. Eine derartige Kompensationseinheit kann dabei auf verschiedene Arten umgesetzt werden, beispielsweise in Form einer regelbaren Wechselstromquelle, die selbst wiederum mit einer zuvor induktiv übertragenen Energie versorgt wird, oder durch Kondensatoren mit zumindest teilweise veränderbarer Kapazität. In diesem Zusammenhang sind auch Kombinationen verschiedener Ansätze zur Einbringung eines sekundärseitigen Kompensationsstromes denkbar, insbesondere um die Vorteile mehrerer, verschiedener Technologien vereinen. An dieser Stelle ist bemerkenswert, dass obwohl die Kompensationseinheit erfindungsgemäß nur auf dem Sekundärteil vorgesehen ist, dennoch eine präzise Modifikation insbesondere der Phasenbeziehungen zwischen primärseitigen Größen möglich ist.

Die Verwendung einer rein auf dem Sekundärteil vorzusehenden Kompensationseinheit stellt insbesondere bei der Umsetzung einer effizienten Energieübertragung bei Langstatorlinearmotoren einen signifikanten Vorteil dar. Derartige Antriebssysteme sind typischerweise durch eine große Anzahl von auf dem Primärteil vorgesehenen Antriebsspulen gekennzeichnet. In der Praxis werden diese Antriebsspulen zur Bildung einer Vortriebskraft häufig gleichzeitig als Sendespulen für eine induktive Energieübertragung herangezogen. Üblicherweise geschieht dies durch die Überlagerung von elektrischen Strömen zur Ausbildung einer Vortriebskraft mit im Vergleich zu diesen höherfrequenten Strömen zur Energieübertragung. Wird bei einem derartigen System nur eine einzelne Kompensationseinheit auf der Sekundärseite benötigt und muss nicht zu jeder einzelnen der vielen auf der Primärseite gegebenen Antriebsspulen eine Kompensationseinheit angeschlossen werden, wie dies im Rahmen der erwähnten resonant induktiven Kopplung in Form von Kondensatoren nötig wäre, kann vielfach ein immenser Hardware-, Kosten- und Konstruktionsaufwand vermieden werden.

Ein weiterer Vorteil des erfindungsgemäßen Konzepts ist dessen im Vergleich zu vielen herkömmlichen Konzepten verbesserte Adaptionsfähigkeit auf sich ändernde Übertragungsverhältnisse, beispielsweise aufgrund von Relativbewegungen zwischen Primär- und Sekundärteil. Dieser Vorteil ergibt sich einerseits aus dem Umstand, dass zu einer Adaption lediglich der sekundärseitige Kompensationsstrom angepasst werden muss, beispielsweise indem Frequenz und/oder Phasenlage und/oder Amplitude des von der Kompensationseinheit abgegebenen Kompensationsstromes variiert werden. Insbesondere bei Linearmotorsystemen kann die Notwendigkeit, Bauteile auf einem großen und ausgedehnten Primärteil zu optimieren, zu Schwierigkeiten in der praktischen Umsetzung führen. Andererseits zeigt sich im praktischen Einsatz, dass die Modifikation einer Phasenverschiebung zwischen zwei elektrischen Größen eines Primärteils wesentlich robuster durchgeführt werden kann, als eine hochsensible Abstimmung einer Anregungsfrequenz auf eine sich gegebenenfalls rapide ändernde Resonanzfrequenz.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt

Fig. 1 ein induktives Energieübertragungssystem
Fig. 2 mögliche Ausgestaltungen der Kompensationseinheit
Fig. 3 eine mögliche Ausgestaltung eines sekundärseitigen Verbrauchers
Fig. 4 eine vereinfachte Abstraktion des betrachteten induktiven Energieübertragungssystems
Fig. 5 ein Langstatorlinearmotorsytem
Fig. 6 die Umsetzung des erfindungsgemäßen induktiven Energieübertragungssystems bei einem Langstatorlinearmotorsytem.

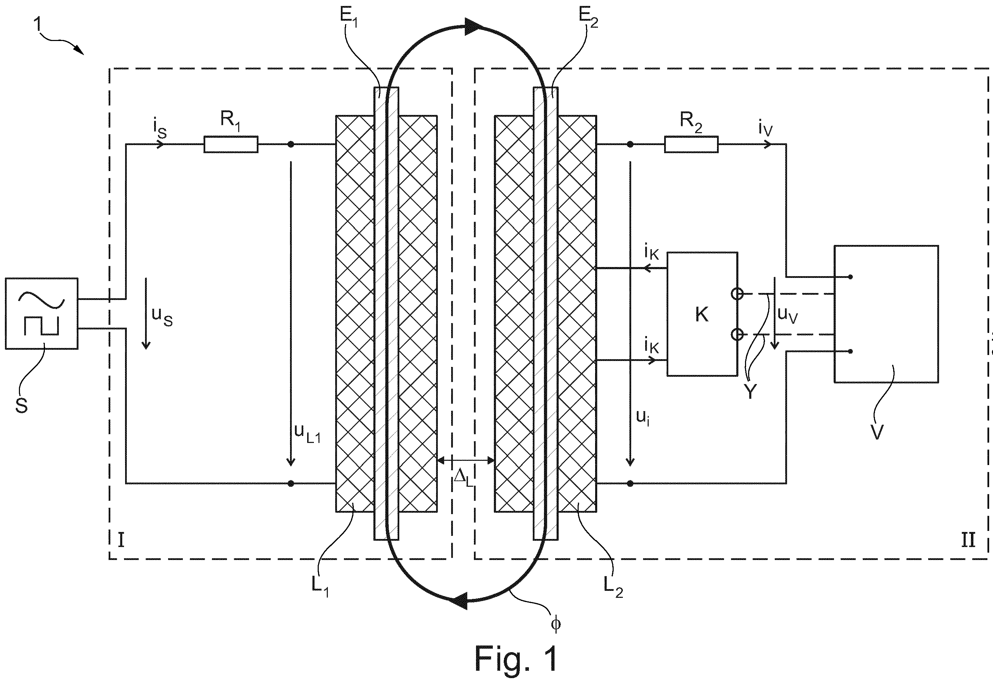

Fig. 1 zeigt das Grundgerüst eines induktiven Energieübertragungssystems 1. Von einer Versorgungseinheit S wird dabei an den sich auf dem Primärteil I befindenden Teil des Energieübertragungssystems 1 eine elektrische Wechselspannung $u_S$ abgegeben. Dabei ist vor allem der Umstand von Bedeutung, dass die Wechselspannung $u_S$ typischerweise dem Betrag nach begrenzt ist, insbesondere entsprechend den eingangs vorgenommenen Ausführungen hinsichtlich physikalischer Grenzen von zur Versorgung eingesetzter Leistungselektronik, und demnach im Zuge einer Energieübertragung nicht beliebig erhöht werden kann. Die Frequenz der Versorgungsspannung $u_S$ wird nachfolgend auch als "Anregungsfrequenz" bezeichnet.

Die Versorgungsspannung $u_S$ verursacht in der Folge einen Primärstrom $i_S$ in Form eines elektrischen Wechselstroms durch den primärseitigen ohmschen Widerstand $R_1$, welcher sämtliche auf dem Primärteil I gegebenen ohmschen Widerstände konzentriert repräsentiert, und die primärseitige Sendespule $L_1$. Der ohmsche Widerstand $R_1$ ist in der in Fig.1 gezeigten Ausführungsform zwischen die Sendespule $L_1$ und die Versorgungseinheit S geschaltet, sodass der ohmsche Widerstand $R_1$ und die Sendespule $L_1$ eine Serienschaltung bilden.

Die Anregungsfrequenz der Versorgungsspannung $u_S$ legt dabei die Frequenz des Primärstromes $i_S$ fest. Die Frequenz des Primärstromes $i_S$ entspricht damit der Frequenz der Versorgungsspannung $u_S$, welche der Anregungsfrequenz entspricht.

In der in Fig.1 gezeigten Ausgestaltung der Erfindung ist zwischen der Versorgungseinheit S und die Sendespule $L_1$ der primärseitige ohmsche Widerstand $R_1$ vorgesehen. Der primärseitige ohmsche Widerstand $R_1$ ist hierbei in Serie zur Sendespule $L_1$ angeordnet. Ansonsten sind auf dem Primärteil I zwischen der Sendespule $L_1$ und der Versorgungseinheit S keine weiteren elektrischen Speicherelemente, wie Kondensatoren usw., vorgesehen, und damit insbesondere keine weiteren elektrischen Speicherelemente, die wie der ohmsche Widerstand $R_1$ in Serie zur Sendespule $L_1$ geschaltet sind. Da damit nur der ohmsche Widerstand $R_1$ zwischen die Versorgungseinheit S und die Sendespule $L_1$ geschaltet ist, wird es möglich, auch Gleichströme in die Sendespule $L_1$ einzubringen, was insbesondere bei Anwendungen bei Transportsystemen von entscheidender Bedeutung ist.

In weiterer Folge fällt an der Primärspule die Primärspannung $u_{L1}$ ab. Um die magnetische Kopplung zwischen Primär- I und Sekundärteil II zu verbessern und/oder den Luftspalt zwischen diesen zu reduzieren, kann in die Sendespule $L_1$ optional ein Eisenkern $E_1$ eingebracht sein. Mögliche Ausführungsformen eines Eisenkerns $E_1$ können unter anderem

durch Ferrite, Pulverkerne oder auch durch geblechte Strukturen gegeben sein, wobei anstelle des Begriffs Eisenkern auch die Bezeichnung "Magnetkern" üblich ist. Selbiges kann für die Empfangsspule $L_2$ am Sekundärteil II durch den Eisenkern $E_2$ vorgesehen sein.

Der Primärstrom $i_S$ führt im nächsten Schritt zur Ausbildung eines ersten magnetischen Wechselfeldes zur Energieübertragung. Dieses erste magnetische Wechselfeld trägt zur Ausbildung eines zeitlich veränderlichen, magnetischen Flusses $\Phi$ bei, welcher die Sendespule $L_1$ und die Empfangsspule $L_2$ durchsetzt. Die beiden Spulen $L_1$ und $L_2$ sind dabei durch den Luftspalt $\Delta_L$ getrennt. Gemäß dem Induktionsgesetz wird so in der Empfangsspule $L_2$ eine elektrische Spannung $u_i = -N_2 \cdot \frac{d}{dt}\Phi$ induziert, welche wiederum einen Sekundärstrom $i_V$ auf dem sich auf dem Sekundärteil II befindenden Teil des Energieübertragungssystems 1 hervorruft. $N_2$ stellt dabei die Windungszahl der Empfangsspule $L_2$ dar. Der Strom $i_V$ fließt weiters über den Widerstand $R_2$, der wie der Widerstand $R_1$ kumulativ die ohmschen Widerstände des Sekundärteils repräsentiert, zu zumindest einem Verbraucher V, an welchem die Spannung $u_V$ abfällt. Der zumindest eine Verbraucher V kann hierbei für eine Vielzahl elektronischer Vorrichtungen stehen, beispielsweise für eine Kommunikations-, Mess- oder Regeleinheit, oder aber auch für einen Akkumulator bzw. Energiespeicher, der mit der übertragenen Energie geladen wird.

Die erfindungsgemäße Einbringung eines sekundärseitigen Kompensationsstrom $i_K$ erfolgt im gezeigten Fall durch die Kompensationseinheit K. Der sekundärseitige Kompensationsstrom $i_K$ verursacht in der Folge ein zweites magnetisches Wechselfeld zur Wirkleistungsoptimierung, welches sich dem ersten magnetischen Wechselfeld zur Energieübertragung überlagert und so ein sich ergebendes, gesamtes magnetisches Wechselfeld herbeiführt. Durch das zweite magnetische Wechselfeld zur Wirkleistungsoptimierung wird in der Sendespule $L_1$ eine zusätzliche Wechselspannung, in der Folge als "primärseitige Kompensationsspannung" $u_K$ bezeichnet, induziert. Die in der Sendespule $L_1$ induzierte primärseitige Kompensationsspannung $u_K$ stellt demnach einen weiteren Bestandteil der gesamten an der Sendespule $L_1$ abfallenden Primärspannung $u_{L1}$ dar und beeinflusst damit die Phasenverschiebung zwischen der an der Sendespule $L_1$ abfallenden Primärspannung $u_{L1}$ und dem durch die Sendespule $L_1$ fließenden Primärstrom $i_S$. Erfindungsgemäß wird diese Phasenverschiebung so modifiziert, dass die resultierende, übertragene Wirkleistung erhöht wird.

Um den Begriff der Erhöhung von übertragener Wirkleistung konkreter zu fassen, wird zunächst der Begriff der nominellen bzw. unkompensierten Wirkleistung $P_N$ eingeführt. Die unkompensierte Wirkleistung $P_N$ beschreibt hierbei jene Wirkleistung, die bei einem herkömmlichen, aus dem Stand der Technik bekannten Betrieb eines induktiven Energieübertragungssystems ohne Einbringung des erfindungsgemäßen Kompensationsstromes $i_K$ erreicht würde. Nominelle bzw. unkompensierte Wirkleistung $P_N$ wird aus diesem Grund auch als Wirkleistung ohne Kompensation oder Wirkleistung ohne geänderte Phasenverschiebung bezeichnet. Wird das erfindungsgemäße Verfahren angewandt und erfindungsgemäß ein sekundärseitiger Kompensationsstrom $i_K$ in die Empfangsspule $L_2$ eingebracht, wird die übertragene Wirkleistung zu einer in der Folge als resultierende Ausgangswirkleistung $P_R$ bezeichneten, neuen Wirkleistung erhöht. Erfindungsgemäß stellt die resultierende Ausgangswirkleistung $P_R$ dabei eine Erhöhung der ursprünglich übertragenen, unkompensierten Wirkleistung $P_N$ um zumindest 10% bis 100%, bevorzugt um 100% bis 500% und besonders bevorzugt um 500% bis 5000% oder mehr dar.

Da die Kompensationseinheit K in einer bevorzugten Ausführungsform ein aktives Bauteil darstellt, welches selbst mit elektrischer Energie versorgt werden muss, ist in Fig. 1 in strichlierter Form eine Verbindungsleitung Y vom Verbraucher V zur Kompensationseinheit K gezeigt, die gegebenenfalls eine elektrische Versorgung der Kompensationseinheit K ermöglicht. Es ist jedoch auch möglich, dass die Kompensationseinheit K gleichzeitig die Auskopplung von übertragener Energie sowie die Funktion eines Gleichrichters G übernimmt. In derartigen Fällen können die Verbraucher V auch direkt an der Kompensationseinheit K angeschlossen sein. Dieser Fall kann beispielsweise eintreten, wenn die Kompensationseinheit K eine steuerbare Wechselstromquelle enthält, die auch die Funktion des Gleichrichters G übernehmen kann.

Für die konkrete Umsetzung der Kompensationseinheit K kann auf mehrere aus der Elektronik bekannte Konzepte zurückgegriffen werden. Das entscheidende Kriterium bei der Realisierung der Kompensationseinheit K ist, dass ein hinsichtlich Phase, Amplitude und Frequenz passender Kompensationsstrom $i_K$ an den sekundärseitigen Teil der Schaltung des Energieübertragungssystems 1 abgegeben werden kann. Dabei können komplexere Realisierungsvarianten durch steuerbare Wechselstromquellen gegeben sein. Weniger aufwendige Implementierungen sind demgegenüber beispielsweise durch zur Empfangsspule $L_2$ parallel geschaltete, kapazitive Speicherelemente möglich, deren Kapazität während des Betriebs angepasst wird, um stets einen gewünschten sekundärseitigen Kompensationsstrom $i_K$ aufzunehmen bzw. abzugeben.

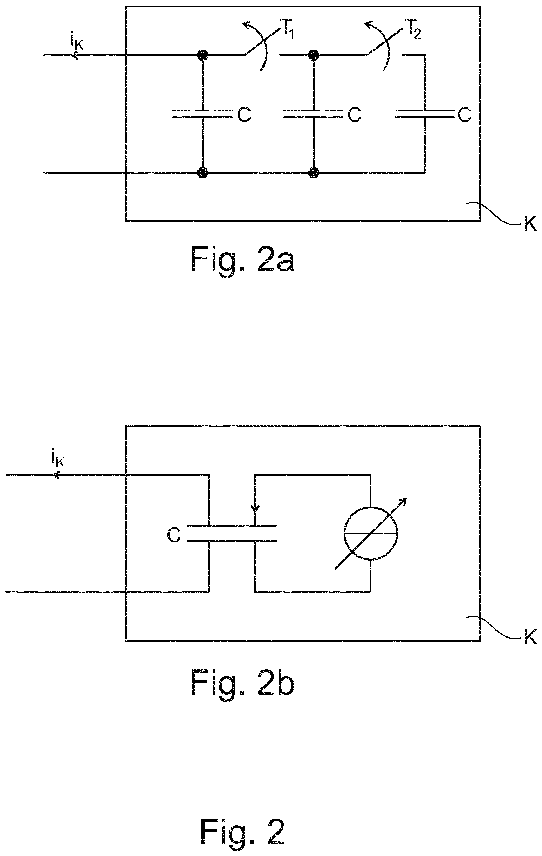

Zwei diesbezügliche Realisierungsvarianten sind in Fig. 2 gezeigt, wobei Fig. 2a eine Verbindung dreier Kondensatoren C mittels zweier Schalter $T_1$ und $T_2$ zeigt. Je nach Schalterstellung ergeben sich so unterschiedliche kapazitive Widerstände. Für die Umsetzung variabler Kapazitäten existieren überdies eine Reihe weiterer möglicher Ansätze. Mechanisch-variable Kondensatoren, wie Trimm- oder Drehkondensatoren, die je auf verschiedensten Materialen für Dielektrika und Elektrodenplatten basieren können, und elektrisch-variable Kondensatoren, wie Kapazitätsdioden, sind hier nur auszugsweise Beispiele. Eine bevorzugte Ausführungsform einer veränderlichen Kapazität ist dabei durch herkömmliche Kondensatoren, wie elektrostatische Festkondensatoren gegeben, bei denen ein additiver kapazitiver Strom eingespeist wird, der so dessen Kapazität variiert. Diese Realisierungsvariante ist in Fig. 2b anhand einer zum Kondensator C parallel geschalteten, variablen Stromquelle dargestellt. Neben kapazitiven Speicherelementen sind auch variable induktive Speicherelemente zur Umsetzung einer Kompensationseinheit K denkbar. Beispiele dafür sind unter anderem Spulen, in denen die Positionierung eines Eisenkerns verändert wird, oder bei denen analog zur Einbringung eines additiven kapazitiven Stromes bei Kondensatoren eine additive Spannung zur Induktivitätsänderung angelegt wird.

In gewissen Fällen kann es sich als besonders vorteilhaft erweisen, Kondensatoren und Spulen in einer Kompensationseinheit K parallel oder seriell miteinander zu verschalten. Mögliche Realisierungen einer Kompensationseinheit K umfassen weiters insbesondere mikroprozessorbasierte Hardware, Mikrocontroller und integrierte Schaltungen (ASIC, FPGA usw.), vor allem um die Ermittlung und letztlich korrekte Einbringung eines geeigneten Kompensationsstromes $i_K$ zu ermöglichen, beispielsweise durch die die Steuerung einer steuerbaren Wechselstromquelle. Im gegenständlichen Fall sind zu diesem Zweck als Bestandteile der Kompensationseinheit K auch analoge Schaltungen zu nennen, beispielsweise auf Basis analoger Operationsverstärkerschaltungen. An dieser Stelle sei erwähnt, dass die Einbringung des Kompensationsstromes $i_K$ direkt in die Empfangsspule $L_2$ zwar eine bevorzugte Ausführungsform der gegenständlichen Erfindung darstellt, es durchaus aber ebenso möglich ist, den Kompensationsstrom $i_K$ in eine andere, eigens zu diesem Zweck auf dem Sekundärteil II vorgesehene weitere Spule einzubringen und anhand dieser weiteren Spule das erfindungsgemäße, zweite magnetische Wechselfeld zu erzeugen.

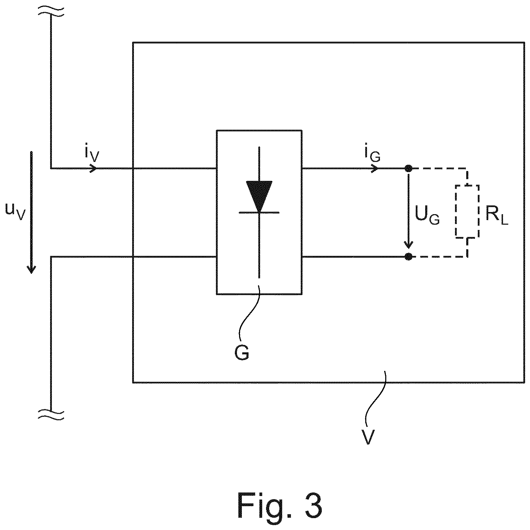

Eine mögliche konkrete Ausführung eines Verbrauchers V ist in Fig. 3 gezeigt. Darin richtet der Gleichrichter G die übertragenen Wechselgrößen $u_V$ und $i_V$ zu Gleichgrößen $u_G$ und $i_G$, die letztlich eine oder mehrere am Sekundärteil II vorgesehene elektrische Lasten $R_L$ versorgen können. In vielen Fällen ist vor einem Verbrauchern V auch noch ein Spannungsregler vorgeschaltet.

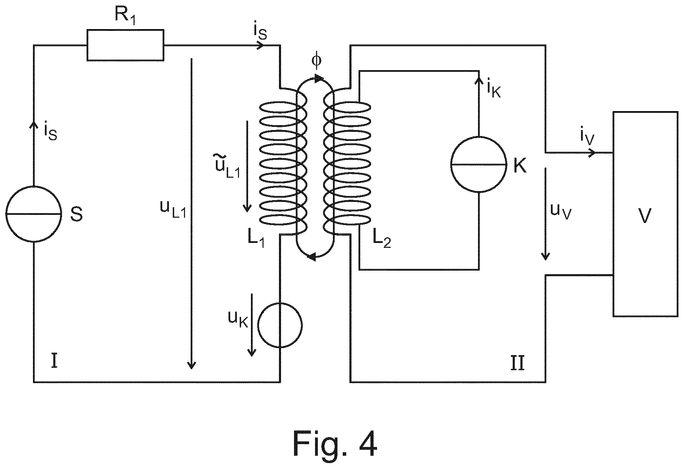

Um das Grundprinzip der gegenständlichen Erfindung näher zu beschreiben, wird in Fig. 4 zur Erläuterung ein weiterer Abstraktionsschritt vorgenommen und der in Fig. 1 gezeigte Aufbau in einer stark vereinfachten Weise dargestellt. Die Versorgungseinheit S und die Kompensationseinheit K werden dabei als Stromquellen gezeigt, wobei für beide Elemente auch Spannungsquellen verwendet werden könnten. Für die folgenden Schritte ist insbesondere von Bedeutung, dass sich der von der Versorgungseinheit eingeprägte Strom $i_S$ nicht oder nur kaum ändert. Auf eine Berücksichtigung von in der Realität üblicherweise auftretenden Einflüssen, wie parasitären Elementen, Leckströmen, nicht sinusförmigen Eingangsspannungen, usw., wird zum Zweck einer möglichsten simplen Erklärung verzichtet. Die nachfolgenden Ausführungen können aber einfach um solche Einflüsse erweitert werden und sind daher nicht einschränkend zu verstehen. Weiters wird angenommen, dass die Sendespule $L_1$ und die Empfangsspule $L_2$ über die gleiche Zahl an Windungen verfügen, womit kein Übersetzungsverhältnis berücksichtigt werden muss. Eine Verallgemeinerung der nachfolgenden Ausführungen auf ein Übersetzungsverhältnis ist für den Fachmann trivial. Um den Einfluss des sekundärseitig eingebrachten Kompensationsstromes $i_K$ klar hervorzuheben, wird die von diesem auf der Primärseite I induzierte Spannung $u_K$ mit einer eigenen Spannungsquelle in Serie zur Sendespule $L_1$ dargestellt. Die an der Sendespule $L_1$ abfallende Primärspannung wird erneut mit $u_{L1}$ notiert, wobei jene Primärspannung, die sich ohne Anwendung des erfindungsgemäßen Verfahrens einstellen würde, mit $\tilde{u}_{L1}$ bezeichnet wird. Geht man zunächst von einem Betrieb ohne sekundärseitigem Kompensationsstrom $i_K$ und rein sinusförmigen Größen mit einer Frequenz f in Hz aus, kann für den Primärstrom $i_S$ und die Primärspannung $u_{L1}$ ohne Beschränkung der Allgemeinheit

$$i_S(t) = \hat{I} \cdot sin\left(2\pi f \cdot t + \frac{\pi}{180}\varphi_i\right)$$

und

$$u_{L1}(t) = \tilde{u}_{L1}(t) = \widehat{U}_L \cdot sin\left(2\pi f \cdot t + \frac{\pi}{180}\varphi_u\right)$$

geschrieben werden, wobei $\hat{I}$ und $\hat{U}_L$ die Amplituden der beiden Größen darstellen, die Winkel $\varphi_i$ und $\varphi_u$ deren Phasenlagen in Grad beschreiben und der Ausdruck $\Delta\varphi = \varphi_u - \varphi_i$ ihre Phasenverschiebung zueinander beschreibt. Bekanntermaßen wird von der Sendespule $L_1$ auf die Empfangsspule $L_2$ reine Blindleistung übertragen, wenn $\Delta\varphi = \pm90$ Grad gilt. Gilt hingegen $\Delta\varphi = 0$ bzw. $\Delta\varphi = 180$ Grad, wobei letzteres ident ist zu $\Delta\varphi = -180$ Grad, wird die übertragene Leistung zu reiner Wirkleistung. Zieht man weiters in Betracht, dass für die durch einen sekundärseitigen Kompensationsstrom $i_K$ induzierte, primärseitige Kompensationsspannung $u_K$ der Ausdruck

$$u_K = L_{12}\frac{d}{dt}i_K$$

gilt, wobei $L_{12}$ die verkoppelte, gegenseitige Induktivität von Sendespule $L_1$ und Empfangsspule $L_2$ darstellt, kann im Fall eines Kompensationsstromes $i_K$

$$i_K(t) = \hat{I}_K \cdot sin\left(2\pi f \cdot t + \frac{\pi}{180}\varphi_K\right)$$

mit der gleichen Frequenz f auch für die Kompensationsspannung $u_K$ eine sinusförmige Beschreibung angegeben werden, insbesondere als

$$u_K(t) = \hat{U}_K \cdot sin\left(2\pi f \cdot t + \frac{\pi}{180}\varphi_{uK}\right).$$

Die Amplitude $\hat{U}_K$ und die Phasenverschiebung $\varphi_{uK}$ hängen hier entsprechend der oben angegebenen Beziehung zwischen $u_K$ und $i_K$ von der Amplitude $\hat{I}_K$ und der Phasenverschiebung $\varphi_K$ ab. Das hat zur Folge, dass für die gesamte an der Sendespule abfallende Spannung nun

$$u_{L1}(t) = \tilde{u}_{L1}(t) + u_K(t) = \hat{U}_L \cdot sin\left(2\pi f \cdot t + \frac{\pi}{180}\varphi_u\right) + \hat{U}_K \cdot sin\left(2\pi f \cdot t + \frac{\pi}{180}\varphi_{uK}\right)$$

gilt, was auch als

$$u_{L1}(t) = \hat{U}_{LK} \cdot sin\left(2\pi f \cdot t + \frac{\pi}{180}\varphi_{uLK}\right)$$

mit der Amplitude

$$\hat{U}_{LK} = \sqrt{[\hat{U}_L \cdot cos\left(\frac{\pi}{180}\varphi_u\right) + \hat{U}_K \cdot cos\left(\frac{\pi}{180}\varphi_{uK}\right)]^2 + [\hat{U}_L \cdot sin\left(\frac{\pi}{180}\varphi_u\right) + \hat{U}_K \cdot sin\left(\frac{\pi}{180}\varphi_{uK}\right)]^2}$$

und der Phasenlage

$$\varphi_{uLK} = arctan\left(\frac{\hat{U}_L \cdot sin\left(\frac{\pi}{180}\varphi_u\right) + \hat{U}_K \cdot sin\left(\frac{\pi}{180}\varphi_{uK}\right)}{\hat{U}_L \cdot cos\left(\frac{\pi}{180}\varphi_u\right) + \hat{U}_K \cdot cos\left(\frac{\pi}{180}\varphi_{uK}\right)}\right)$$

geschrieben werden kann. Die Ausdrücke für die Amplitude $\hat{U}_{LK}$ und Phasenlage $\varphi_{uLK}$ hängen dabei direkt von der Amplitude $\hat{U}_K$ und der Phasenverschiebung $\varphi_{uK}$ und damit auch vom Kompensationsstrom $i_K$ ab. Daran erkennt man, dass durch den Kompensationsstrom $i_K$ einerseits die Phasenlage $\varphi_{uLK}$ der resultierenden Primärspannung $u_{L1}$ und andererseits auch die Phasenbeziehung $\Delta\varphi$ zwischen $i_S$ und die Primärspannung $u_{L1}$ modifiziert werden kann. Dadurch kann letztlich direkt beeinflusst werden, wieviel Wirk- und wieviel Blindleistung übertragen wird. Es sei an dieser Stelle erneut angemerkt, dass es sich bei der in Fig. 4 gezeigten Situation um eine stark vereinfachte Darstellung handelt, um das Grundprinzip des erfindungsgemäßen Verfahrens darzustellen.

Der Kern der von der Kompensationseinheit K zu lösenden Regelungsaufgabe kann demnach formuliert werden als die Ermittlung desjenigen sekundärseitigen Kompensationsstromes $i_K$, durch dessen Einbringung die übertragene Wirkleistung maximiert wird. Zur Lösung dieser Kernaufgabe werden, da die Frequenz durch die primärseitige Spannung $u_S$ bzw. den primärseitigen Strom $i_S$ üblicherweise bereits vorgegeben ist, bevorzugt die Amplitude und die Phasenlage des sekundärseitigen Kompensationsstromes $i_K$ angepasst.

Um eine geeignete Wahl für Amplitude und Phasenlage des sekundärseitigen Kompensationsstromes $i_K$ zu treffen, kann auf verschiedenste Adaptionsalgorithmen zurückgegriffen werden, beispielsweise auf einen sogenannten "Maximum Power Point Tracker", oder auch auf anderweitige, eigens zu diesem Zweck entworfene Regler und/oder (autonome) Lernmechanismen. Zur Kontrolle, ob durch eine bestimmte Wahl oder Veränderung der Amplitude oder Phasenlage des sekundärseitigen Kompensationsstromes $i_K$ eine gewünschte Veränderung der Phasenbeziehung $\Delta\varphi$ zwischen Primärstrom $i_S$ und Primärspannung $u_{L1}$ auch tatsächlich erreicht worden ist, kann beispielsweise aus Messdaten von Primärstrom $i_S$ und Primärspannung $u_{L1}$ deren Phasenbeziehung berechnet werden.

Um den benötigten sekundärseitigen Kompensationsstrom $i_K$ in der Kompensationseinheit K ermitteln zu können, kann die Kompensationseinheit K mit Messdaten relevanter elektrischer Größen, insbesondere von primär-

seitigen Größen $u_{L1}$ und/oder $i_S$, aber auch von sekundärseitigen Größen wie $u_i$, $u_V$ oder $i_V$, versorgt werden. Zu diesem Zweck können geeignete Messsensoren, bevorzugt auf der Sekundärseite II, aber auch auf der Primärseite I, vorgesehen sein, die ihre Messwerte an die Kompensationseinheit K übermitteln. In einer bevorzugten Ausführung des erfindungsgemäßen Verfahrens werden die primärseitige Spannung $u_S$ und der primärseitige Strom $i_S$ messtechnisch erfasst und kabellos, beispielsweise anhand einer Funkverbindung, an die Kompensationseinheit K übermittelt, um insbesondere bei einer Implementierung des erfindungsgemäßen Verfahrens bei einem Transportsystem 2 eine Verkabelung zwischen Primär- I und Sekundärteil II zu vermeiden.

Eine besonders vorteilhafte Umsetzung des erfindungsgemäßen Verfahrens ergibt sich weiters durch eine indirekte Ermittlung von primärseitiger Spannung $u_S$ und primärseitigem Strom $i_S$, wobei beispielsweise aus auf der Sekundärseite II erfassten Messdaten von induzierter Spannung $u_i$ und sekundärseitigem Strom $i_V$ unter Einsatz eines Beobachters oder eines Filters auf die primärseitige Spannung $u_S$ und den primärseitigen Strom $i_S$ gerechnet wird, womit weder eine Funkverbindung noch eine Verkabelung zwischen Primär I und Sekundärteil II zur Umsetzung des erfindungsgemäßen Verfahrens notwendig sind.

In einer weiteren vorteilhaften Ausführungsform kann auf primärseitige elektrische Größen wie Spannung $u_S$ und Strom $i_S$ auch verzichtet werden. Stattdessen kann eine Gleichspannung $u_G$, die, wie in Fig. 3 gezeigt, bevorzugt von einem auf der Sekundärseite II angeordneten Gleichrichter G erzeugt wird, als Maß für die Güte der primärseitigen Phasenverschiebung herangezogen werden. Diesem Ansatz liegt die Erkenntnis zu Grunde, dass im Fall einer erhöhten, zum Verbraucher V und damit zum Gleichrichter G übertragenen Ausgangswirkleistung $P_R$ vom Gleichrichter G in vielen Fällen eine höhere Gleichspannung $u_g$ gleichgerichtet wird. Eine höhere Gleichspannung $u_g$ kann demzufolge ein Maß für eine erhöhte Übertragung von Wirkleistung darstellen. Auch hier gilt, dass die Spannung $u_g$ nicht zwingend direkt gemessen werden muss, sondern gegebenenfalls ebenfalls indirekt mittels einer Filterung oder einer Beobachtung ermittelt werden kann.

Darüber hinaus ist natürlich nicht ausgeschlossen, trotz einer auf dem Sekundärteil II stattfindenden Adaption eines sekundärseitigen Kompensationsstromes $i_K$ oder einer Kompensationseinheit K, zusätzlich auch die Anregungsfrequenz der Eingangsspannung $u_S$ zu adaptieren. Damit kann zusätzlich die Anregungsfrequenz an eine sich einstellende elektrische Resonanzfrequenz des Energieübertragungssystems 1 angepasst werden. Bei dieser Herangehensweise ist jedoch dafür Sorge zu tragen, dass durch die damit einhergehenden Änderungen der primärseitigen elektrischen Größen nicht das eigentliche Ziel der gegenständlichen Erfindung, nämlich die Adaption der Phasenverschiebung zwischen den primärseitigen Größen Primärspannung $u_{L1}$ und Primärstrom $i_S$, negativ beeinflusst wird.

Im Rahmen der gegenständlichen Erfindung kann es allerdings auch vorteilhaft sein, die Anregungsfrequenz, also die Frequenz des elektrischen Primärstromes $i_S$ und/oder die Frequenz der Versorgungsspannung $u_S$, verschieden von einer elektrischen Resonanzfrequenz des Energieübertragungssystems 1 zu wählen. Die Frequenz des elektrischen Primärstromes $i_S$ kann hierbei um zumindest 1% des Wertes der Frequenz des elektrischen Primärstromes $i_S$ oder um zumindest 5% des Wertes der Frequenz des elektrischen Primärstromes $i_S$ oder um zumindest 10% des Wertes der Frequenz des elektrischen Primärstromes $i_S$ oder um zumindest 50% des Wertes der Frequenz des elektrischen Primärstromes $i_S$ von einer elektrischen Resonanzfrequenz des Energieübertragungssystems 1 abweichen.

Allgemein gesprochen kann es im Rahmen der gegenständlichen Erfindung vorteilhaft sein, das Energieübertragungssystems 1 bei einer Frequenz abseits der elektrischen Resonanzfrequenzen des Energieübertragungssystems 1 zu betreiben.

In mehreren Anwendungsfällen der gegenständlichen Erfindung wurde diesbezüglich festgestellt, dass ein Maximum an von der Primärseite I an die Sekundärseite II übertragener Wirkleistung erreicht wird, wenn die Anregungsfrequenz und damit die Frequenz des elektrischen Primärstromes $i_S$ um mehr als 1%, oder um mehr als 3%, oder um mehr als 5% des Wertes der Frequenz des elektrischen Primärstromes $i_S$ von der niedrigsten von Null verschiedenen Resonanzfrequenz des Energieübertragungssystems 1 abweicht. In diesen Fällen wird das Energieübertragungssystems 1 bewusst neben seinen Resonanzfrequenzen und damit außerhalb seiner Resonanzpunkte betrieben.

Vorteilhafterweise wird das Energieübertragungssystems 1 dabei bei einer Frequenz betrieben, die höher ist, z.B. um 1% oder um 3% oder um 5%, als die niedrigste elektrische Resonanzfrequenz des Energieübertragungssystems 1.

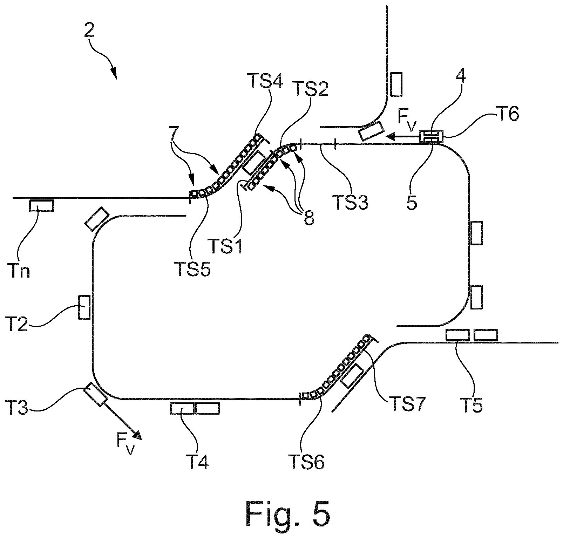

Wie eingangs erwähnt, sind elektromagnetische Transportsysteme 2 wie Linear- oder Planarmotorsysteme ein bevorzugter Anwendungsbereich des erfindungsgemäßen Verfahrens zur induktiven Energieübertragung. Um näher auf die dort gegebenen Besonderheiten bei der Umsetzung der Erfindung einzugehen, zeigt Fig. 5 zunächst allgemein eine mögliche Ausführung eines Transportsystems 2. Das Transportsystem 2 besteht aus einer Anzahl von Transportsegmenten TSk (k ist hierbei ein Index, der für alle vorhandenen Transportsegmente TS1, TS2, TS3, ... steht), von denen aus Gründen der Übersichtlichkeit beispielhaft nur die Transportsegmente TS1 ... TS7 bezeichnet sind. Die Transportsegmente TSk bilden verschiedene Streckenabschnitte aus, beispielsweise eine Gerade, Kurven mit unterschiedlichen Winkeln und Radien, Weichen, usw., und können sehr flexibel zusammengesetzt werden, um die Transportstrecke des Transportsystems 2 auszubilden. Zusammen bilden die Transportsegmente TSk damit eine Transportstrecke, entlang der die Transporteinheiten Tn (n ist hierbei ein Index, der für alle vorhandenen Transporteinheiten T1, T2, T3, T4, ... steht) bewegt werden können. Dieser modulare Aufbau ermöglicht eine sehr flexible Gestaltung des Transportsystems 2. Die Transportsegmente TSk sind dabei üblicherweise an einer ortsfesten Stützkonstruktion 6 (in Fig. 5 nicht dargestellt) angeordnet.

Im gegenständlichen Fall ist das Transportsystem 2 als Langstatorlinearmotor ausgeführt, wobei die Statorsegmente TSk in an sich bekannter Weise jeweils einen Teil eines Langstators eines Langstatorlinearmotors ausbilden. Entlang des Langstators der Transportsegmente TSk sind daher in Längsrichtung in bekannter Weise eine Vielzahl von den Stator ausbildenden, ortsfesten elektrischen Antriebsspulen 7, 8 angeordnet (in Fig. 5 aus Gründen der Übersichtlichkeit nur für die Transportsegmente TS1, TS2, TS4, TS5, TS6, TS7 angedeutet), durch die ein Antriebsstrom fließt und die mit den Antriebsmagneten 4, 5 an den Transporteinheiten T1 ... Tn (in Fig. 5 aus Gründen der Übersichtlichkeit nur für die Transporteinheit T6 angedeutet) zusammenwirken können, um in bekannter Weise eine Vortriebskraft $F_V$ zum Bewegen der Transporteinheit Tn zu erzeugen. Typischerweise umfasst der elektrische Antriebsstrom auch einen Gleichanteil, also einen Gleichstrom.

Neben als Langstatorlinearmotoren ausgeführten Transportsystemen 2 stellen als Planarmotoren realisierte Transportsysteme einen weiteren wichtigen Anwendungsfall des erfindungsgemäßen Verfahrens dar. Ein Planarmotor weist im Wesentlichen einen Stator auf, der eine Transportebene ausbildet, in der eine oder mehrere Transporteinheiten zumindest zweidimensional bewegt werden können. Die Transporteinheiten fungieren hinsichtlich des erfindungsgemäßen Verfahr als Sekundärteile II. Der Stator ist in der Regel aus ein oder mehreren Transportsegmenten aufgebaut, die die Rolle der Primärteile I übernehmen. Um die Transporteinheiten in der Transportebene zu bewegen wird eine auf die Transporteinheit wirkende Antriebskraft erzeugt, indem ein Magnetfeld des Stators (des/der Transportsegmente) und ein Magnetfeld der Transporteinheit zusammenwirken. Um eine Bewegung der Transporteinheit in eine bestimmte Bewegungsrichtung zu bewirken, muss zumindest eines der Magnetfelder, also jenes des Stators und/oder jenes der Transporteinheit, zeitlich veränderlich sein, um der Bewegung der Transporteinheit zu folgen. Meist ist jedoch nur ein Magnetfeld, in der Regel jenes am Stator zeitlich veränderlich und das jeweils andere Magnetfeld (das an der Transporteinheit) ist üblicherweise konstant, also zeitlich nicht veränderlich.

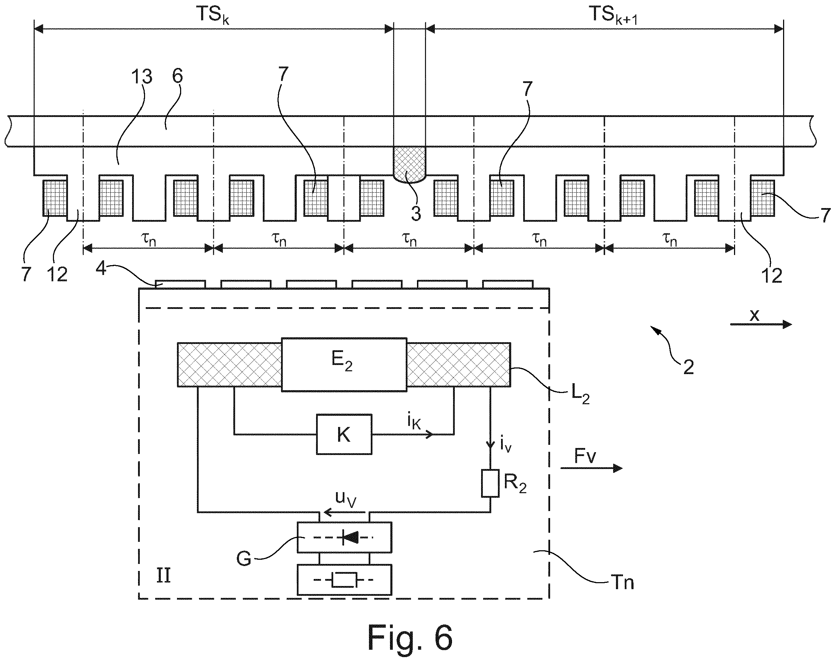

Wie das Verfahren zur induktiven Energieübertragung der gegenständlichen Erfindung in einem Transportsystem 2 umgesetzt werden kann, ist in Fig. 6 im Detail gezeigt. Fig. 6 zeigt eine Detailansicht zweier benachbarter gerader Transportsegmente TSk, TSk+1. Die Transportsegmente TSk, TSk+1 sind dabei zur Ausbildung einer Transportstrecke an einer stationären Stützkonstruktion 6 angeordnet oder bilden selbst einen Teil der stationären Stützkonstruktion 6. Zwischen den Transportsegmenten TSk, TSk+1 kann vorzugsweise ein magnetisch leitfähiges und elastisches Material 3 angebracht sein. An den Transportsegmenten TSk bzw. TSk+1 sind die Antriebsspulen 7 des Langstatorlinearmotors angeordnet. An der Transporteinheit Tn sind die Antriebsmagnete 4 angeordnet. Ein Antriebsmagnet 4 kann als Elektromagnet (Erregungsspulen) und/oder als Permanentmagnet ausgeführt sein. Die Antriebsspulen 7 sind vorzugsweise auf Zähnen 12 eines ferromagnetischen Kerns 13 (beispielsweise ein Eisen Blechpaket) angeordnet. Die Antriebsspulen 7 können aber natürlich auch kernlos ausgeführt sein. An der Transporteinheit Tn können natürlich auch noch (hier aus Gründen der Übersichtlichkeit nicht dargestellte) Führungselemente wie Rollen, Räder, Gleitflächen, Führungsmagnete, etc., vorgesehen sein, um die Transporteinheit Tn entlang der Transportstrecke 20 zu führen und zu halten, insbesondere auch im Stillstand. Zur Erzeugung eines in Längsrichtung x der Transportstrecke 20, also in Bewegungsrichtung der Transporteinheit Tn möglichst gleichmäßigen magnetischen Flusses und folglich einer gleichmäßigen Vortriebskraft Fv sind die Antriebsspulen 7 üblicherweise in Längsrichtung (bzw. Bewegungsrichtung) x gesehen in einem üblicherweise als Nutteilung $\tau_n$ bezeichneten regelmäßigen Abstand voneinander an den Transportsegmenten TSk, TSk+1 angeordnet.

Wie Fig. 6 zeigt, nehmen die Transporteinheiten Tn hinsichtlich des erfindungsgemäßen Verfahrens zur induktiven Energieübertragung die Rolle der Sekundärteile II ein, die analog zum in Fig. 1 gezeigten Aufbau gestaltet werden können. Die Funktion des Primärteils I wird vom ausgedehnten Langstator übernommen, wo wie erwähnt die Antriebsspulen 7 zusätzlich zur Energieübertragung verwendet werden können, indem ein höherfrequenter Strom zur Energieübertragung einem niederfrequenten Antriebsstrom zur Erzeugung einer Vortriebskraft Fv überlagert wird. Um nicht unnötigerweise Antriebsspulen 7 zu bestromen, die weit von einer Transporteinheit Tn entfernt sind und deshalb keinen Beitrag zu einer Energieübertragung liefern können, werden üblicherweise nur Antriebsspulen in unmittelbarer Nähe zu einer Transporteinheiten Tn bestromt. Dabei ist anzumerken, dass zur Energieübertragung auch mehrere benachbarte Antriebsspulen 7 als Sendespulen $L_1$ zusammenwirken können.

Mehrere mit dem Transportsystem 2 einhergehende Besonderheiten streichen dabei einige der bereits zuvor genannten Vorteile des erfindungsgemäßen Verfahrens zusätzlich hervor. So ist es beim Entwurf und bei der Auslegung von Transportsystemen 2 oft gewünscht, die Nutteilung $\tau_n$ möglichst klein zu wählen, um eine möglichst genaue Positionierung einer Transporteinheit Tn realisieren zu können. Bei einer Reduzierung der Nutteilung $\tau_n$ rücken die Antriebsspulen 7 näher zusammen, was insbesondere zu einer Erhöhung von primärseitigen Streuinduktivitäten führt, welche einen erhöhten Blindleistungsbedarf mit sich bringen, mit allen bereits genannten negativen Folgen hinsichtlich einer induktiven Energieübertragung. Da bei Transportsystemen 2 die Versorgungsspannung $u_S$ begrenzt ist und Streuinduktivitäten vergleichsweise groß sind, wird in derartigen Fällen oft nahezu die gesamte verfügbaren Spannung

$u_S$ zum Treiben der Streuflüsse benötigt. Durch das erfindungsgemäße Verfahren wird es jedoch auch in solchen Fällen möglich, trotz teils beträchtlicher primärseitiger Blindleistungen und anderer Einschränkungen, wie begrenzten Versorgungsspannungen $u_S$ oder begrenzten Primärströmen $i_S$, auch Wirkleistung in einem Ausmaß zu übertragen, durch das es dennoch möglich wird, einen oder auch mehrere sekundärseitige Verbraucher hinreichend mit elektrischer Energie zu versorgen.

Ein weiterer Punkt der im Fall von Transportsystemen 2 in einem besonderen Maß zu Tage tritt, ist vielfach die Notwendigkeit einer Adaption auf Änderungen der Übertragungsverhältnisse, die sich in diesem Zusammenhang aus den prinzipbedingt vorhandenen Relativbewegungen zwischen Primärteil I und Sekundärteil II ergeben. Ist zur Realisierung einer effizienten Energieübertragung wie beschrieben bereits eine einzelne sekundärseitige Kompensationseinheit K ausreichend, kann eine Adaption vergleichsweise einfach durchgeführt werden, da konkret nur die Kompensationseinheit K bzw. der von ihr bereitgestellte Kompensationsstrom $i_K$ an sich ändernde Übertragungsverhältnisse angepasst werden muss. Überdies wird ein immenser Hardwareaufwand vermieden, der mit einem primärseitigen Einbau einer Kompensationseinheit K zu jeder Antriebsspule 7 einhergehen würde.

Die erwähnte Erweiterung des erfindungsgemäßen Verfahrens um eine gleichzeitige Anpassung der Anregungsfrequenz an eine sich ergebende elektrische Resonanzfrequenz des Energieübertragungssystems 1 kann im Fall von Langstatorlinearmotoren und Planarmatoren eine wertvolle Erweiterungsmöglichkeit darstellen. Da sich die Übertragungsverhältnisse aufgrund von Bewegungen zwischen Primär- I und Sekundärteil II fortlaufend ändern können, kann durch einen zusätzlichen Abgleich zwischen der Anregungsfrequenz und einer Resonanzfrequenz des Energieübertragungssystems 1 eine weitere Verbesserung der Energieübertragung erreicht werden.

## Patentansprüche

1. Verfahren zur induktiven Energieübertragung zwischen einem Primärteil (I) und einem Sekundärteil (II), wobei der Primärteil (I) und der Sekundärteil (II) Teile eines Transportsystems (2), vorzugsweise eines Linearmotorsystems, eines Planarmotorsystems oder einer Magnetschwebebahn, sind, wobei der Primärteil (I) einem feststehenden Teil des Transportsystems (2) und der Sekundärteil (II) einem relativ zu diesem beweglichen Teil des Transportsystems (2) entspricht, wobei der Sekundärteil (II) relativ zum Primärteil (I) bewegt wird, wobei von einer Versorgungseinheit (S) in eine am Primärteil (I) angeordnete Sendespule ($L_1$) ein elektrischer Primärstrom ($i_S$) zum Aufbau eines ersten magnetischen Wechselfeldes zur Energieübertragung eingebracht wird, wodurch in einer am Sekundärteil (II) angeordneten Empfangsspule ($L_2$) eine elektrische Wechselspannung ($u_i$) induziert wird, die einen elektrischen Sekundärstrom ($i_V$) am Sekundärteil (II) und damit einen eine unkompensierte Wirkleistung ($P_N$) umfassenden Leistungsfluss zu zumindest einem mit der Empfangsspule ($L_2$) verbundenen Verbraucher (V) herbeiführt, **dadurch gekennzeichnet, dass** durch eine am relativ zum Primärteil (I) bewegten Sekundärteil (II) angeordnete Kompensationseinheit (K) ein sekundärseitiger Kompensationsstrom ($i_K$) in eine sekundärseitige Spule ($L_k$) eingebracht wird, **dass** durch den sekundärseitigen Kompensationsstrom ($i_K$) in der sekundärseitigen Spule ($L_k$) ein zweites magnetisches Wechselfeld erzeugt wird, welches sich dem ersten magnetischen Wechselfeld zur Energieübertragung überlagert und in der Sendespule ($L_1$) eine primärseitige Kompensationsspannung ($u_K$) induziert, **dass** die Phasenverschiebung zwischen der an der Sendespule ($L_1$) abfallenden elektrischen Primärspannung ($u_{L1}$) und dem durch die Sendespule ($L_1$) fließenden Primärstrom ($i_S$) durch die in der Sendespule ($L_1$) induzierte primärseitige Kompensationsspannung ($u_K$) so verändert wird, dass die resultierende Ausgangswirkleistung ($P_R$), welche vom Primärteil (I) nach der Veränderung der Phasenverschiebung an den zumindest einen mit der Empfangsspule ($L_2$) verbundenen Verbraucher (V) übertragen wird, im Vergleich zur unkompensierten Wirkleistung ($P_N$) ohne geänderte Phasenverschiebung erhöht wird, **und dass** in die am Primärteil (I) angeordnete Sendespule ($L_1$) kein die Phasenverschiebung zwischen der an der Sendespule ($L_1$) abfallenden elektrischen Primärspannung ($u_{L1}$) und dem durch die Sendespule ($L_1$) fließenden Primärstrom ($i_S$) verändernder, primärseitiger Kompensationsstrom eingebracht wird, welcher von einem elektrischen Speicherelement bereitgestellt wird, welches in Serie zur Sendespule ($L_1$) und zwischen die Sendespule ($L_1$) und die Versorgungseinheit (S) geschaltet ist.

2. Verfahren nach Anspruch 1, **dadurch gekennzeichnet, dass** die Phasenverschiebung zwischen der an der Sendespule ($L_1$) abfallenden elektrischen Primärspannung ($u_{L1}$) und dem durch die Sendespule ($L_1$) fließenden Primärstrom ($i_S$) nur durch die vom sekundärseitigen Kompensationsstrom ($i_K$) hervorgerufene und in der Sendespule ($L_1$) induzierte primärseitige Kompensationsspannung ($u_K$) verändert wird.

3. Verfahren nach Anspruch 1 oder 2, **dadurch gekennzeichnet, dass** in die Sendespule ($L_1$) zusätzlich zum Primärstrom ($i_S$) zum Aufbau eines ersten magnetischen Wechselfeldes ein elektrischer Antriebsstrom eingebracht wird, durch den eine auf den Sekundärteil (II) wirkende Vortriebskraft (Fv) erzeugt wird.

**4.** Verfahren nach Anspruch 3, **dadurch gekennzeichnet, dass** mit dem elektrischen Antriebsstrom ein Gleichstrom in die Sendespule ($L_1$) eingebracht wird.

**5.** Verfahren nach einem der vorhergehenden Ansprüche, **dadurch gekennzeichnet, dass** die an der Sendespule ($L_1$) abfallende elektrische Primärspannung ($u_{L1}$) und der durch die Sendespule ($L_1$) fließende Primärstrom ($i_S$) bestimmt und an die Kompensationseinheit (K) übermittelt werden, **dass** aus den übermittelten Daten von Primärspannung ($u_{L1}$) und Primärstrom ($i_S$) die Phasenverschiebung zwischen Primärspannung ($u_{L1}$) und Primärstrom ($i_S$) ermittelt wird **und dass** auf Basis der Phasenverschiebung zwischen Primärspannung ($u_{L1}$) und Primärstrom ($i_S$) der sekundärseitige Kompensationsstrom ($i_K$) verändert wird, um die Phasenverschiebung zwischen Primärspannung ($u_{L1}$) und Primärstrom ($i_S$) näher zu null oder näher zu 180 Grad zu bringen.

**6.** Verfahren nach einem der vorhergehenden Ansprüche, **dadurch gekennzeichnet, dass** der von der Kompensationseinheit (K) in die Empfangsspule ($L_2$) eingebrachte sekundärseitige Kompensationsstrom ($i_K$) an Änderungen der Übertragungsverhältnisse zwischen Sende- ($L_1$) und Empfangsspule ($L_2$) angepasst wird, welche insbesondere durch Alterung, Temperatureinfluss oder Verschleiß der Sende- ($L_1$) und Empfangsspule ($L_2$), der Versorgungseinheit (S) oder des zumindest einen Verbrauchers (V) und/oder durch Änderungen der Relativposition zwischen Primär- (I) und Sekundärteil (II) verursacht werden.

**7.** Verfahren nach einem der vorhergehenden Ansprüche, **dadurch gekennzeichnet, dass** die Frequenz des Primärstromes ($i_S$), welcher von der Versorgungseinheit (S) in die am Primärteil (I) angeordnete Sendespule ($L_1$) eingebracht wird, einer sich einstellenden Resonanzfrequenz einer resonanzfähigen elektrischen Schaltung nachgeführt wird, welche zumindest durch die Sendespule ($L_1$), die Empfangsspule ($L_2$), die Kompensationseinheit (K) und den zumindest einen Verbraucher (V) gebildet wird.

**8.** Vorrichtung zur induktiven Energieübertragung, umfassend einen Primärteil (I) und einen Sekundärteil (II), wobei der Primärteil (I) und der Sekundärteil (II) Teile eines Transportsystems (2), vorzugsweise eines Linearmotorsystems, eines Planarmotorsystems oder einer Magnetschwebebahn, sind, und wobei der Primärteil (I) einem feststehenden Teil des Transportsystems (2) und der Sekundärteil (II) einem relativ zu diesem beweglichen Teil des Transportsystems (2) entspricht, wobei am Primärteil (I) eine Versorgungseinheit (S) vorgesehen ist, um in eine am Primärteil (I) angeordnete Sendespule ($L_1$) einen elektrischen Primärstrom ($i_S$) zum Aufbau eines ersten magnetischen Wechselfeldes zur Energieübertragung einzubringen, wobei am Sekundärteil (II) eine Empfangsspule ($L_2$) und zumindest ein mit der Empfangsspule ($L_2$) elektrisch verbindbarer elektrischer Verbraucher (V) angeordnet sind, wobei in der Empfangsspule ($L_2$) durch das erste magnetische Wechselfeld zur Energieübertragung eine elektrische Wechselspannung ($u_i$) induziert wird, die einen Wechselstrom ($i_V$) am Sekundärteil (II) und damit einen eine unkompensierte Wirkleistung ($P_N$) umfassenden Leistungsfluss zum zumindest einen mit der Empfangsspule ($L_2$) verbindbareren Verbraucher (V) herbeiführt, **dadurch gekennzeichnet, dass** am Sekundärteil (II) zumindest eine Kompensationseinheit (K) angeordnet ist, welche ausgestaltet ist, einen sekundärseitigen Kompensationsstrom ($i_K$) in eine sekundärseitige Spule ($L_k$) einzubringen und dadurch ein zweites magnetisches Wechselfeld zu erzeugen, welches sich dem ersten magnetischen Wechselfeld zur Energieübertragung überlagert und in der Sendespule ($L_1$) eine primärseitige Kompensationsspannung induziert, wobei durch die in der Sendespule ($L_1$) induzierte primärseitige Kompensationsspannung ($u_K$) die Phasenverschiebung zwischen der an der Sendespule ($L_1$) abfallenden Primärspannung ($u_{L1}$) und dem durch die Sendespule ($L_1$) fließenden Primärstrom ($i_S$) so verändert wird, dass die resultierende Ausgangswirkleistung ($P_R$), welche vom Primärteil (I) nach der Veränderung der Phasenverschiebung zwischen der an der Sendespule ($L_1$) abfallenden elektrischen Primärspannung ($u_{L1}$) und dem durch die Sendespule ($L_1$) fließenden Primärstrom ($i_S$) an den zumindest einen mit der Empfangsspule ($L_2$) verbindbaren Verbraucher (V) übertragen wird, im Vergleich zur unkompensierten Wirkleistung ($P_N$) ohne geänderte Phasenverschiebung erhöht wird, **und dass** auf dem Primärteil (I) zwischen die Sendespule ($L_1$) und die Versorgungseinheit (S) keine in Serie zur Sendespule ($L_1$) geschalteten elektrischen Speicherelemente vorgesehen sind, um in die Sendespule ($L_1$) einen primärseitigen Kompensationsstrom zur Änderung der Phasenverschiebung zwischen der an der Sendespule ($L_1$) abfallenden elektrischen Primärspannung ($u_{L1}$) und dem durch die Sendespule ($L_1$) fließenden Primärstrom ($i_S$) einzubringen.

**9.** Vorrichtung nach Anspruch 8, **dadurch gekennzeichnet, dass** die zumindest eine Kompensationseinheit (K) zumindest einen elektrisch variierbaren Kondensator und/oder zumindest eine elektrisch variierbare Spule und/oder eine Verschaltung zumindest eines elektrisch variierbaren Kondensators und einer elektrisch variierbaren Spule umfasst.

**Claims**

1.  A method for inductive energy transmission between a primary part (I) and a secondary part (II), the primary part (I) and the secondary part (II) being parts of a transport system (2), preferably of a linear motor system, a planar motor system or a magnetic levitation railroad system, the primary part (I) corresponding to a stationary part of the transport system (2) and the secondary part (II) corresponding to a part of the transport system (2) that is movable relative thereto, the secondary part (II) being moved relative to the primary part (I), a primary electrical current ($i_S$) being fed from a supply unit (S) into a transmitting coil ($L_1$) arranged on the primary part (I) in order to create a first alternating magnetic field for energy transmission, whereby an electrical AC voltage ($u_i$) is induced in a receiving coil ($L_2$) arranged on the secondary part (II), which AC voltage ($u_i$) causes an electrical secondary current ($i_V$) on the secondary part (II) and thus a power flow comprising an uncompensated active power ($P_N$) to at least one load (V) connected to the receiving coil ($L_2$), **characterized in that** a secondary-side compensation current ($i_K$) is fed into a secondary-side coil ($L_k$) by a compensation unit (K) arranged on the secondary part (II) which is moved relative to the primary part (I), **in that** a second alternating magnetic field is generated by the secondary-side compensation current ($i_K$) in the secondary-side compensation current ($L_k$), which second alternating magnetic field is superimposed on the first alternating magnetic field for energy transmission and induces a primary-side compensation voltage ($u_K$) in the transmitting coil ($L_1$), **in that** a phase shift between the electrical primary voltage ($u_{L1}$) dropping across the transmitting coil ($L_1$) and the primary current ($i_S$) flowing through the transmitting coil ($L_1$) is changed by the primary-side compensation voltage ($u_K$) induced in the transmitting coil ($L_1$) in such a way that a resulting output active power ($P_R$), which is transmitted by the primary part (I) after the change of the phase shift on the at least on load (V) connected to the receiving coil ($L_2$) is increased compared to the uncompensated active power ($P_N$) without a changed phase shift **and in that** no primary-side compensation current, which changes the phase shift between the electrical primary voltage ($u_{L1}$) dropping across the transmitting coil ($L_1$) and the primary current ($i_S$) flowing through the transmitting coil ($L_1$) and which is provided by an electrical storage element connected in series to the transmitting coil ($L_1$) and between the transmitting coil ($L_1$) and the supply unit (S), is fed into the transmitting coil ($L_1$) arranged on the primary part (I).

2.  The method according to claim 1, **characterized in that** the phase shift between the electrical primary voltage ($u_{L1}$) dropping across the transmitting coil ($L_1$) and the primary current ($i_S$) flowing through the transmitting coil ($L_1$) is changed only by the primary-side compensation voltage ($u_K$) caused by the secondary-side compensation current ($i_K$) and induced in the transmitting coil ($L_1$).

3.  The method according to claim 1 or claim 2, **characterized in that** an electrical drive current is introduced into the transmitting coil ($L_1$) in addition to the primary current ($i_S$) in order to create a first alternating magnetic field by means of which the drive force (Fv) acting on the secondary part (II) is generated.

4.  The method according to claim 3, **characterized in that** a direct current is introduced into the transmitting coil ($L_1$) with the electrical drive current.

5.  The method according to any of the preceding claims, **characterized in that** the electrical primary voltage ($u_{L1}$) dropping across the transmitting coil ($L_1$) and the primary current ($i_S$) flowing through the transmitting coil ($L_1$) are determined and transmitted to the compensation unit (K), **in that** from the transmitted data of primary voltage ($u_{L1}$) and primary current ($i_S$), the phase shift between primary voltage ($u_{L1}$) and primary current ($i_S$) is determined, **and in that** on the basis of the phase shift between primary voltage ($u_{L1}$) and primary current ($i_S$), the secondary-side compensation current ($i_K$) is changed in order to bring the phase shift between primary voltage ($u_{L1}$) and primary current ($i_S$) closer to zero or closer to 180 degrees.

6.  The method according to any of the preceding claims, **characterized in that** the secondary-side compensation current ($i_K$) fed by the compensation unit (K) into the receiving coil ($L_2$) is adapted to changes in the transmission conditions between the transmitting coil ($L_1$) and the receiving coil ($L_2$) which are caused in particular by aging, temperature influence or wear of the transmitting coil ($L_1$) and receiving coil ($L_2$), the supply unit (S) or the at least one load (V) and/or by changes in the relative position between primary part (I) and secondary part (II).

7.  The method according to any of the preceding claims, **characterized in that** the frequency of the primary current ($i_S$), which is fed from the supply unit (S) into the transmitting coil ($L_1$) arranged on the primary part (I) is adjusted to conform to an arising resonance frequency of a resonant electrical circuit, which is formed by at least the transmitting coil ($L_1$), the receiving coil ($L_2$), the compensation unit (K) and the at least one load (V).

8.  A device for inductive energy transmission, comprising a primary part (I) and a secondary part (II), the primary part (I) and the secondary part (II) being parts of a transport system (2), preferably a linear motor system, a planar motor system, or a magnetic levitation railroad system, and the primary part (I) corresponding to a stationary part of the transport system (2) and the secondary part (II) corresponding to a part of the transport system (2) that is movable relative thereto, a supply unit (S) being provided on the primary part (I) in order to feed an electrical primary current ($i_S$) into a transmitting coil ($L_1$) arranged on the primary part (I) in order to create a first alternating magnetic field for energy transmission, a receiving coil ($L_2$) and at least one load (V) which can be connected electrically to the receiving coil ($L_2$) being arranged on the secondary part (II), an electrical AC voltage ($u_i$) being induced in the receiving coil ($L_2$) by the first alternating magnetic field for energy transmission, which AC voltage ($u_i$) causes an AC current ($i_V$) on the secondary part (II) and thus a power flow comprising an uncompensated active power ($P_N$) to the at least one load (V) which can be connected to the receiving coil ($L_2$), **characterized in that** at least one compensation unit (K) is arranged on the secondary part (II), which compensation unit is designed to feed a secondary-side compensation current ($i_K$) into a secondary-side coil ($L_k$) and thereby generate a second alternating magnetic field which is superimposed on the first alternating magnetic alternating field for energy transmission and which induces a primary-side compensation voltage in the transmitting coil ($L_1$), a phase shift between the primary voltage ($u_{L1}$) dropping across the transmitting coil ($L_1$) and the primary current ($i_S$) flowing through the transmitting coil ($L_1$) being changed by the primary-side compensation voltage ($u_K$) induced in the transmitting coil ($L_1$) such that the resulting output active power ($P_R$), which is transmitted from the primary part (I), after the change of the phase shift between the primary voltage ($u_{L1}$) dropping across the transmitting coil ($L_1$) and the primary current ($i_S$) flowing through the transmitting coil ($L_1$) to the at least one load (V) which can be connected to the receiving coil ($L_2$), is increased compared to the uncompensated active power ($P_N$) without a changed phase shift, **and in that** no electrical storage elements connected in series with the transmitting coil ($L_1$) are provided on the primary part (I) between the transmitting coil ($L_1$) and the supply unit (S) in order to feed a primary-side compensation current for changing the phase shift between the electrical primary voltage ($u_{L1}$) dropping across the transmitting coil ($L_1$) and the primary current ($i_S$) flowing through the transmitting coil ($L_1$) into the transmitting coil ($L_1$).

9. The device according to claim 8, **characterized in that** the at least one compensation unit (K) comprises at least one electrically variable capacitor, and/or at least one electrically variable coil, and/or an interconnection of at least one electrically variable capacitor and one electrically variable coil.

## Revendications

1. Procédé de transfert d'énergie par induction entre une partie primaire (I) et une partie secondaire (II), la partie primaire (I) et la partie secondaire (II) étant des parties d'un système de transport (2), de préférence d'un système à moteur linéaire, d'un système à moteur planaire ou d'un train à sustentation magnétique, la partie primaire (I) correspondant à une partie fixe du système de transport (2) et la partie secondaire (II) correspondant à une partie du système de transport (2) qui est mobile par rapport à celle-ci, la partie secondaire (II) étant déplacée par rapport à la partie primaire (I), un courant électrique primaire ($i_S$) étant introduit par une unité d'alimentation (S) dans une bobine émettrice ($L_1$) disposée sur la partie primaire (I) pour créer un premier champ magnétique alternatif destiné au transfert d'énergie, ce qui induit une tension électrique alternative ($u_i$) dans une bobine réceptrice ($L_2$) disposée sur la partie secondaire (II), laquelle produit un courant électrique secondaire ($i_V$) sur la partie secondaire (II) et ainsi un flux de puissance comprenant une puissance active non compensée ($P_N$) vers au moins une charge (V) connectée à la bobine réceptrice ($L_2$), **caractérisé en ce qu'**un courant de compensation côté secondaire ($i_K$) est introduit dans une bobine côté secondaire ($L_k$) par une unité de compensation (K) disposée sur la partie secondaire (II) déplacée par rapport à la partie primaire (I), **en ce qu'**un deuxième champ magnétique alternatif, qui est superposé au premier champ magnétique alternatif pour le transfert d'énergie et induit une tension de compensation côté primaire ($u_K$) dans la bobine émettrice ($L_1$), est généré par le courant de compensation côté secondaire ($i_K$) dans la bobine côté secondaire ($L_k$), **en ce que** le déphasage entre la tension électrique primaire ($u_{L1}$) qui chute aux bornes de la bobine émettrice ($L_1$) et le courant primaire ($i_S$) qui passe à travers la bobine émettrice ($L_1$) est modifié par la tension de compensation côté primaire ($u_K$) induite dans la bobine émettrice ($L_1$) de telle façon que la puissance active de sortie ($P_R$) qui en résulte et qui est transmise par la partie primaire (I) après la modification du déphasage à l'au moins une charge (V) connectée à la bobine réceptrice ($L_2$), est augmentée par comparaison à la puissance active non compensée ($P_N$) sans modification du déphasage, et **en ce qu'**aucun courant de compensation côté primaire modifiant le déphasage entre la tension électrique primaire ($u_{L1}$) qui chute aux bornes de la bobine émettrice ($L_1$) et le courant primaire ($i_S$) qui passe à travers la bobine émettrice ($L_1$) n'est introduit dans la bobine émettrice ($L_1$) disposée sur la partie primaire (I), lequel courant de compensation est fourni par un élément de stockage électrique qui est monté en série avec la bobine émettrice ($L_1$) et entre la bobine émettrice ($L_1$) et l'unité d'alimentation (S).

**2.** Procédé selon la revendication 1, **caractérisé en ce que** le déphasage entre la tension électrique primaire ($u_{L1}$) qui chute aux bornes de la bobine émettrice ($L_1$) et le courant primaire ($i_S$) qui passe à travers la bobine émettrice ($L_1$) n'est modifié que par la tension de compensation côté primaire ($u_K$) produite par le courant de compensation côté secondaire ($i_K$) et induite dans la bobine émettrice ($L_1$).

**3.** Procédé selon la revendication 1 ou 2, **caractérisé en ce qu'**un courant électrique d'entraînement est introduit dans la bobine émettrice ($L_1$) en plus du courant primaire ($i_S$) pour créer un premier champ magnétique alternatif, par l'intermédiaire duquel une force de propulsion (Fv) agissant sur la partie secondaire (II) est générée.

**4.** Procédé selon la revendication 3, **caractérisé en ce qu'**un courant continu est introduit dans la bobine émettrice ($L_1$) avec le courant électrique d'entraînement.

**5.** Procédé selon l'une des revendications précédentes, **caractérisé en ce que** la tension électrique primaire ($u_{L1}$) qui chute aux bornes de la bobine émettrice ($L_1$) et le courant primaire ($i_S$) qui passe à travers la bobine émettrice ($L_1$) sont déterminés et transmis à l'unité de compensation (K), **en ce que** le déphasage entre la tension primaire ($u_{L1}$) et le courant primaire ($i_S$) est déterminé à partir des données transmises concernant la tension primaire ($u_{L1}$) et le courant primaire ($i_S$) et **en ce que** le courant de compensation côté secondaire ($i_K$) est modifié sur la base du déphasage entre la tension primaire ($u_{L1}$) et le courant primaire ($i_S$), afin de faire tendre le déphasage entre la tension primaire ($u_{L1}$) et le courant primaire ($i_S$) vers zéro ou vers 180 degrés.

**6.** Procédé selon l'une des revendications précédentes, **caractérisé en ce que** le courant de compensation côté secondaire ($i_K$) introduit dans la bobine réceptrice ($L_2$) par l'unité de compensation (K) est adapté aux modifications des rapports de transfert entre les bobines émettrice ($L_1$) et réceptrice ($L_2$), lesquelles modifications sont notamment provoquées par le vieillissement, l'influence de la température ou l'usure des bobines émettrice ($L_1$) et réceptrice ($L_2$), de l'unité d'alimentation (S) ou de l'au moins une charge (V) et/ou par des modifications de la position relative entre la partie primaire (I) et la partie secondaire (II).

**7.** Procédé selon l'une des revendications précédentes, **caractérisé en ce que** la fréquence du courant primaire ($i_S$), qui est introduit par l'unité d'alimentation (S) dans la bobine émettrice ($L_1$) disposée sur la partie primaire (I), est asservie à une fréquence de résonance s'établissant dans un circuit électrique résonnant qui est formé au moins par la bobine émettrice ($L_1$), la bobine réceptrice ($L_2$), l'unité de compensation (K) et l'au moins une charge (V).

**8.** Dispositif de transfert d'énergie par induction, comprenant une partie primaire (I) et une partie secondaire (II), la partie primaire (I) et la partie secondaire (II) étant des parties d'un système de transport (2), de préférence d'un système à moteur linéaire, d'un système à moteur planaire ou d'un train à sustentation magnétique, et la partie primaire (I) correspondant à une partie fixe du système de transport (2) et la partie secondaire (II) correspondant à une partie du système de transport (2) qui est mobile par rapport à celle-ci, une unité d'alimentation (S) étant prévue sur la partie primaire (I) afin d'introduire un courant électrique primaire ($i_S$) dans une bobine émettrice ($L_1$) disposée sur la partie primaire (I) pour créer un premier champ magnétique alternatif destiné au transfert d'énergie, une bobine réceptrice ($L_2$) et au moins une charge électrique (V) pouvant être connectée électriquement à la bobine réceptrice ($L_2$) étant disposées sur la partie secondaire (II), une tension électrique alternative ($u_i$) étant induite dans la bobine réceptrice ($L_2$) par le premier champ magnétique alternatif pour le transfert d'énergie, laquelle produit un courant alternatif ($i_V$) sur la partie secondaire (II) et ainsi un flux de puissance comprenant une puissance active non compensée ($P_N$) vers au moins une charge (V) pouvant être connectée à la bobine réceptrice ($L_2$), **caractérisé en ce que** sur la partie secondaire (II) est disposée au moins une unité de compensation (K) qui est conçue pour introduire un courant de compensation côté secondaire ($i_K$) dans une bobine côté secondaire ($L_k$) et pour générer ainsi un deuxième champ magnétique alternatif, qui est superposé au premier champ magnétique alternatif pour le transfert d'énergie et induit une tension de compensation côté primaire dans la bobine émettrice ($L_1$), la tension de compensation côté primaire ($u_K$) induite dans la bobine émettrice ($L_1$) modifiant le déphasage entre la tension primaire ($u_{L1}$) qui chute aux bornes de la bobine émettrice ($L_1$) et le courant primaire ($i_S$) qui passe à travers la bobine émettrice ($L_1$) de telle façon que la puissance active de sortie ($P_R$) qui en résulte et qui est transmise par la partie primaire (I) après la modification du déphasage entre la tension électrique primaire ($u_{L1}$) qui chute aux bornes de la bobine émettrice ($L_1$) et le courant primaire ($i_S$) qui passe à travers la bobine émettrice ($L_1$) à l'au moins une charge (V) pouvant être connectée à la bobine réceptrice ($L_2$), est augmentée par comparaison à la puissance active non compensée ($P_N$) sans modification du déphasage, et **en ce qu'**aucun élément de stockage électrique monté en série avec la bobine émettrice ($L_1$) n'est prévu sur la partie primaire (I) entre la bobine émettrice ($L_1$) et l'unité d'alimentation (S), pour introduire dans la bobine émettrice ($L_1$) un courant de compensation côté primaire destiné à modifier le déphasage entre la tension électrique primaire ($u_{L1}$) qui chute aux bornes de la bobine émettrice ($L_1$) et le courant primaire ($i_S$) qui passe à travers la bobine

émettrice ($L_1$).

9. Dispositif selon la revendication 8, **caractérisé en ce que** l'au moins une unité de compensation (K) comprend au moins un condensateur modifiable électriquement et/ou au moins une bobine modifiable électriquement et/ou une interconnexion d'au moins un condensateur modifiable électriquement et d'une bobine modifiable électriquement.

Fig. 1

EP 4 352 854 B1

Fig. 2a

Fig. 2b

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7958830 B2
- EP 2793356 B1
- EP 2903407 A1
- US 2012217111 A1